# EUROPEAN PATENT APPLICATION

(11) **EP 4 597 894 A1**
(43) Date of publication of application: **06.08.2025**
(21) Application number: 22959879.2
(22) Date of filing: 27.09.2022
(51) Int. Cl.: H04L 5/00

(54) **ASSOCIATION INDICATION METHOD AND APPARATUS FOR PHASE-TRACKING REFERENCE SIGNAL, AND STORAGE MEDIUM**

(71) Applicant: Beijing Xiaomi Mobile Software Co., Ltd., Beijing 100085 (CN)
(72) Inventor: GAO, Xueyuan, Beijing 100085 (CN)
(74) Representative: Gunzelmann, Rainer
(86) International application number: PCT/CN2022/121921
(87) International publication number: WO 2024/065230

(57) **Abstract**

The present disclosure relates to the technical field of communications, and relates to an association indication method and apparatus for a phase-tracking reference signal (PTRS), and a storage medium, for use in determining an association relationship between a PTRS and a demodulation reference signal (DMRS) port when a terminal supporting 8 antenna ports and at most 8 transmission layers sends the PTRS, so as to improve the accuracy of estimation of a phase noise source under multiple antenna panels. The method comprises: sending indication information to a terminal by means of a PTRS-DMRS association relationship indication field in downlink control information (DCI), wherein the indication information is used for indicating an association relationship between a PTRS and a DMRS port when the terminal sends the PTRS, and the terminal is a terminal supporting 8 antenna ports and uplink transmission having at most 8 transmission layers.

## Description

### FIELD

The present disclosure relates to the field of communication technologies, and in particular relates to a method and an apparatus for association indication of a phase-tracking reference signal (PTRS) and a storage medium.

### BACKGROUND

Phase noise (PN) is caused by the implementation of a local oscillator that destroys the orthogonality of sub-carriers in an orthogonal frequency division multiplexing (OFDM) system, and this causes a common phase error (CPE) to cause rotation of a modulation constellation at a fixed angle and inter-carrier interference (ICI) to cause scattering of constellation points, which is more obvious at a high frequency. Due to the greater impact of the CPE, the compensation for the CPE is mainly considered in a new radio (NR). In the NR, a phase-tracking reference signal (PTRS) is designed for the estimation of the CPE. In order to enhance the signal coverage and improve the signal quality, the PTRS is configured to a terminal by a network as a UE-specific reference signal, and the PTRS is used to track the phase noise introduced by the local oscillator in a base station and a UE. A PTRS port for sending the PTRS is associated with a demodulation reference signal (DMRS) antenna port. The PTRS may be regarded as an extension of the DMRS, and the PTRS and the DMRS have a close relationship, such as using the same precoding, port association, generation of an orthogonal sequence, a quasi-colocation (QCL) relationship and the like.

Currently, a communication protocol supports at most 4 transmission layers in an uplink transmission and at most eight transmission layers in a downlink transmission. A research objective of R18 includes increasing a numeric count of transmission antennas to a maximum number of antennas (8Tx) in the uplink transmission for supporting a higher uplink transmission rate comparable to a downlink transmission rate.

In a case where a terminal in the uplink transmission extends to a transmission with the maximum number of antennas (8Tx), an existing association relationship between the PTRS port and the DMRS port also needs to be enhanced for supporting the estimation of the CPE by the PTRS in different scenarios.

### SUMMARY

In order to overcome the problems existing in the related art, the present disclosure provides a method and an apparatus for association indication of a phase-tracking reference signal (PTRS) and a storage medium.

According to a first aspect of embodiments of the present disclosure, there is provided a method for association indication of a phase-tracking reference signal (PTRS), performed by a network device, including: sending indication information to a terminal via a PTRS-demodulation reference signal (DMRS) association indication field in downlink control information (DCI), in which the indication information indicates an association relationship between a PTRS port and a DMRS port in a case where the terminal sends the PTRS, and the terminal is a terminal supporting eight antenna ports and supporting an uplink transmission with a maximum number of transmission layers being 8.

According to a second aspect of embodiments of the present disclosure, there is provided a method for association indication of a phase-tracking reference signal (PTRS), performed by a terminal, including: receiving indication information sent by a network device via a PTRS-demodulation reference signal (DMRS) association indication field in downlink control information (DCI), in which the indication information indicates an association relationship between a PTRS port and a DMRS port in a case where the terminal sends the PTRS, and the terminal is a terminal supporting eight antenna ports and supporting an uplink transmission with a maximum number of transmission layers being 8.

According to a third aspect of embodiments of the present disclosure, there is provided an apparatus for association indication of a phase-tracking reference signal (PTRS), applied to a network device, including: a sending module configured to send indication informationto a terminal via a PTRS-demodulation reference signal (DMRS) association indication field in downlink control information (DCI), in which the indication information indicates an association relationship between a PTRS port and a DMRS port in a case where the terminal sends the PTRS, and the terminal is a terminal supporting eight antenna ports and supporting an uplink transmission with a maximum number of transmission layers being 8.

According to a fourth aspect of embodiments of the present disclosure, there is provided an apparatus for association indication of a phase-tracking reference signal (PTRS), applied to a terminal, including: a receiving module configured to receive indication information sent by a network device via a PTRS-demodulation reference signal (DMRS) association indication field in downlink control information (DCI), in which the indication information indicates an association relationship between a PTRS port and a DMRS port in a case where the terminal sends the PTRS, and the terminal is a terminal supporting eight antenna ports and supporting an uplink transmission with a maximum number of transmission layers being 8.

According to a fifth aspect of embodiments of the present disclosure, there is provided a device for association indication of a phase-tracking reference signal (PTRS), including: a processor; and a memory for storing processor-executable instructions; in which the processor is configured to perform the method for association indication of the PTRS in the first aspect and its implementations described above.

According to a sixth aspect of embodiments of the present disclosure, there is provided a device for association indication of a phase-tracking reference signal (PTRS), including: a processor; and a memory for storing processor-executable instructions; in which the processor is configured to perform the method for association indication of the PTRS in the second aspect and its implementations described above.

According to a seventh aspect of embodiments of the present disclosure, there is provided a storage medium having stored therein instructions that, when executed by a processor of a network device, cause the network device to perform the method for association indication of the PTRS in the first aspect and its implementations described above.

According to an eighth aspect of embodiments of the present disclosure, there is provided a storage medium having stored therein instructions that, when executed by a processor of a terminal, cause the terminal to perform the method for association indication of the PTRS in the second aspect and its implementations described above.

The technical solution provided in the embodiments of the present disclosure may include the following advantageous effects. The network device sends the indication information to the terminal via the PTRS-DMRS association indication field in the DCI, in which the indication information indicates the association relationship between the PTRS port and the DMRS port in a case where the terminal sends the PTRS, and the terminal is the terminal supporting eight antenna ports and supporting the uplink transmission with the maximum number of transmission layers being 8. Therefore, regarding the terminal supporting eight antenna ports and supporting the uplink transmission with the maximum number of transmission layers being 8, the association relationship between the PTRS port and the DMRS port in a case where the terminal sends the PTRS may be determined based on the indication information sent by the network device, thereby improving the estimation accuracy of a phase noise source in the scene of a multi-antenna panel.

It is to be understood that both the foregoing general description and the following detailed description are illustrative and explanatory only and are not restrictive of the disclosure, as claimed.

### BRIEF DESCRIPTION OF THE DRAWINGS

The accompanying drawings, which are incorporated in and constitute a part of this specification, illustrate embodiments consistent with the present disclosure and, together with the description, serve to explain the principles of the present disclosure.
FIG. 1 is a schematic diagram illustrating a wireless communication system according to an illustrative embodiment.
FIG. 2 is a schematic diagram illustrating a DMRS according to an illustrative embodiment.
FIG. 3 is a flow chart illustrating a method for association indication of a PTRS according to an illustrative embodiment.
FIG. 4 is a flow chart illustrating a method for association indication of a PTRS according to an illustrative embodiment.
FIG. 5 is a block diagram illustrating an apparatus for association indication of a PTRS according to an illustrative embodiment.
FIG. 6 is a block diagram illustrating an apparatus for association indication of a PTRS according to an illustrative embodiment.
FIG. 7 is a block diagram illustrating a device for association indication of a PTRS according to an illustrative embodiment.
FIG. 8 is a block diagram illustrating a device for association indication of a PTRS according to an illustrative embodiment.

### DETAILED DESCRIPTION

Reference will now be made in detail to illustrative embodiments, examples of which are illustrated in the accompanying drawings. The following description refers to the accompanying drawings in which the same numbers in different drawings represent the same or similar elements unless otherwise represented. The implementations set forth in the following description of illustrative embodiments do not represent all implementations consistent with the present disclosure.

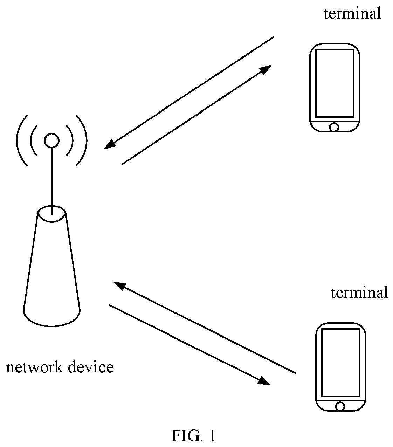

A method for association indication of a phase-tracking reference signal (PTRS) provided in the embodiments of the present disclosure may be performed by a wireless communication system illustrated in FIG. 1. Referring to FIG. 1, the wireless communication system includes a network device and a terminal. The terminal is connected to the network device via a wireless resource and performs data transmission with the network device via the wireless resource.

It may be understood that the wireless communication system shown in FIG. 1 is only for schematic illustration. The wireless communication system may also include other network devices, such as core network devices, wireless relay devices, and wireless backhaul devices, which are not shown in FIG 1. The number of network devices and the number of terminals included in the wireless communication system are not limited in the embodiments of the present disclosure.

It may be further understood that the wireless communication system in the embodiments of the present disclosure is a network that provides a wireless communication function. The wireless communication system may employ different communication technologies, such as code division multiple access (CDMA), wideband code division multiple access (WCDMA), time division multiple access (TDMA), frequency division multiple access (FDMA), orthogonal frequency-division multiple access (OFDMA), single carrier frequency division multiple access (SC-FDMA), and carrier sense multiple access with collision avoidance. The network may be divided into a 2nd generation (2G) network, a 3G network, a 4G network, or a future evolution network, such as a 5G network, which may also be referred to as a new radio (NR) network, according to the capacity, rate, delay and other factors of different networks. For ease of description, a wireless communication network will be sometimes abbreviated as a network in the present disclosure.

Further, the network device involved in the present disclosure may also be referred to as a radio access network device. The radio access network device may be a base station, an evolved node B, a home base station, an access point (AP) in a wireless fidelity (Wi-Fi) system, a wireless relay node, a wireless backhaul node, a transmission point (TP), a transmission and reception point (TRP), or the like, or may also be a generation NodeB (gNB) in an NR system, or may also be a component or a part of a device that constitutes a base station, etc. It is to be understood that the specific technology and specific device form adopted by the network device are not limited in the embodiments of the present disclosure. In the present disclosure, the network device may provide communication coverage for a specific geographical area, and may communicate with a terminal located within the coverage area (cell). The network device may also be a vehicle-mounted device when it is used in a vehicle to everything (V2X) communication system.

Further, the terminal involved in the present disclosure, which may also be referred to as a terminal device, a user equipment (UE), a mobile station (MS), a mobile terminal (MT), or the like, is a device that provides voice and/or data connectivity to a user. For example, the terminal may be a handheld device with a wireless connection function, a vehicle-mounted device, or the like. At present, some examples of the terminal are a smart phone, a customer premises equipment, a pocket personal computer (PPC), a palmtop computer, a personal digital assistant (PDA), a notebook computer, a tablet computer, a wearable device, a vehicle-mounted device, or the like. In addition, the terminal device may also be a vehicle-mounted device when it is used in a vehicle to everything (V2X) communication system. It is to be understood that the specific technology and specific device form adopted by the terminal are not limited in the embodiments of the present disclosure.

In the related art, in order to improve edge coverage of the cell and provide a more balanced service quality in a service area, data is cooperatively transmitted among multiple TRPs/panels in different ways. From the perspective of network morphology, network deployment with a large number of distributed access points and baseband centralized processing will be more conducive to providing a balanced user experience rate, and significantly reduce the delay and signaling overhead caused by handover. Using the cooperation among multiple TRPs/panels to transmit/receive channels from multiple beams at multiple angles may better overcome various occlusion/blocking effects, and ensure the robustness of link connections, and is suitable for an ultra reliable and low latency communication (URLLC) service to improve transmission quality and meet reliability requirements.

In the research stage of R16, a transmission on a physical downlink shared channel (PDSCH) is enhanced based on the application of a downlink multi-TRP/panel multi-point cooperative transmission technology. Since a data transmission includes the scheduling feedback of uplink and downlink channels, only enhancing the downlink data channel may not guarantee the overall service performance in the research of the URLLC. Therefore, in the study of R17, a physical downlink control channel (PDCCH), a physical uplink control channel (PUCCH) and a physical uplink shared channel (PUSCH) continue to be enhanced.

Regarding the PDSCH/PUSCH, a data layer of the data transmission corresponds to a demodulation reference signal (DMRS) port used for demodulation. A DMRS design of a data channel (PDSCH/PUSCH) in the NR system mainly includes the following two types.

Front-load DMRS: within each scheduling time unit, the first occurrence of the DMRS should be located as close as possible to a starting point of a scheduling. The use of the front-load DMRS helps a receiving side to quickly estimate a channel and perform reception detection, and plays an important role in reducing the delay and supporting a so-called self-contained structure. Depending on a total number of orthogonal DMRS ports, the front-load DMRS may occupy up to two consecutive orthogonal frequency division multiplexing (OFDM) symbols.

Additional DMRS: regarding a low mobility scenario, the front-load DMRS may achieve channel estimation performance that meets the demodulation requirements with lower overheads. However, a moving speed considered in the NR system may reach up to 500km/h. Facing with such a large mobility of dynamic range, in addition to the front-load DMRS, more DMRS symbols need to be inserted in a scheduling duration in medium/high speed scenarios to meet the estimation accuracy of channel time-variation. In order to solve this problem, a DMRS structure that combines the front-load DMRS with an additional DMRS with configurable time domain density is adopted in the NR system. A pattern of each set of additional DMRS s is a repetition of the front-load DMRS.

Within each scheduling time unit, in a case where the additional DMRSs are present, the pattern of each set of additional DMRSs is consistent with the front-load DMRS. Therefore, the pattern design of the front-load DMRS is the basis of the DMRS design. The design ideas of the front-load DMRS are divided into two categories. The first category (type 1) adopts a coordinated multi-beam (COMB) + operation control center (OCC) structure, and the second category (type 2) is based on a frequency division multiplexing (FDM) + OCC structure.

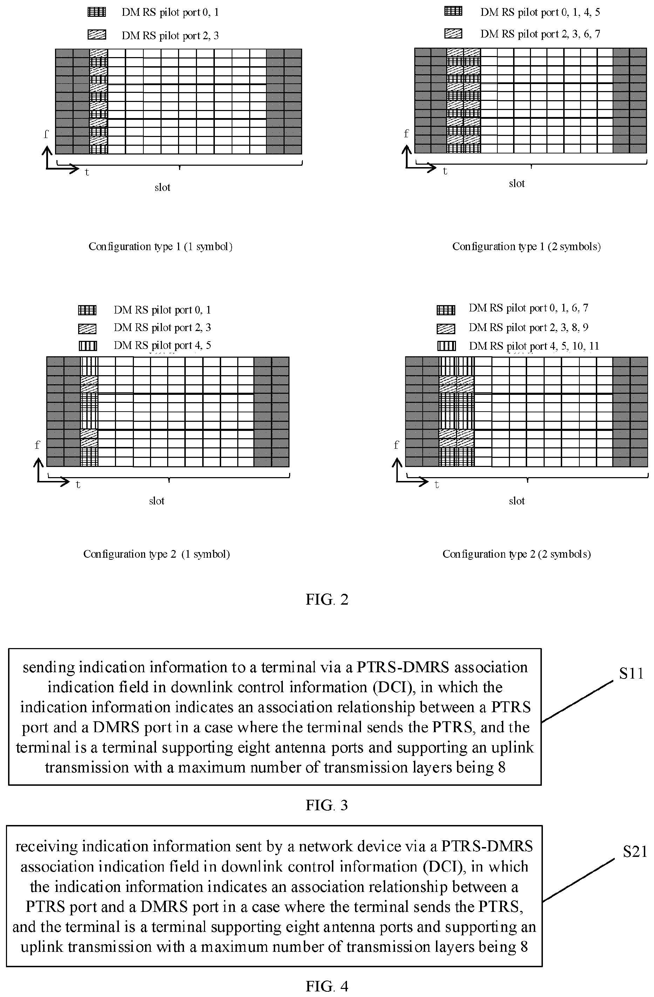

Depending on a numeric count of orthogonal ports used for a transmission, the front-load DMRS may be configured as at most two OFDM symbols. Considering the factor such as power utilization efficiency, in a case of using the front-load DMRS with two symbols, a TD-OCC is further used in a time domain on the basis of a frequency domain compressive sensing (CS) or OCC. The two types of front-load DMRS patterns are shown in FIG. 2.

In medium/high speed scenarios, in addition to the front-load DMRS, more DMRS symbols need to be inserted in the scheduling duration to meet the estimation accuracy of channel time-variation. The DMRS structure that combines the front-load DMRS with the additional DMRS with the configurable time domain density is adopted in the NR system. The pattern of each set of additional DMRSs is the repetition of the front-load DMRS. Therefore, consistent with the front-load DMRS, each set of additional DMRSs may also occupy up to two consecutive DMRS symbols. Depending on the specific usage scenario, up to three sets of additional DMRS s may be configured in each scheduling. A numeric count of additional DMRSs depends on the configuration of a high-layer parameter and a specific scheduling duration.

In the related art, in the NR, the PTRS is designed for the estimation of the CPE. In order to enhance the signal coverage and improve the signal quality, the PTRS is configured to the terminal by the network as a UE-specific reference signal, and the PTRS is used to track phase noise introduced by a local oscillator in the base station and the UE. A PTRS port is associated with the DMRS antenna port. The PTRS may be regarded as an extension of the DMRS, and the PTRS and the DMRS have a close relationship, such as using the same precoding, port association, generation of an orthogonal sequence, a quasi-colocation (QCL) relationship and the like.

A numeric count of PTRS ports is related to a numeric count of phase noise sources. In a case where multiple independent phase noise sources exist, each phase noise source needs a PTRS port to perform phase estimation on the phase noise source. Therefore, 1 PTRS port in a downlink transmission and 2 PTRS ports in an uplink transmission are supported in an NR15/16.

Currently, whether or not the PTRS is transmitted in the uplink transmission is controlled by the configuration of a high-layer parameter. In a case where the high-layer parameter does not configure "phaseTrackingRS" for the UE in "DMRS-UplinkConfig", the UE does not transmit the PTRS in the uplink transmission.

In a case where the high-layer parameter configures the "phaseTrackingRS" in the "DMRS-UplinkConfig", the UE transmits the PTRS in the uplink transmission. A maximum number of PTRS ports being 1 or 2 is configured by "maxNrofPorts" in the high-layer parameter "PTRS-UplinkConfig".

In a case where the maximum number of PTRS ports configured by the high-layer parameter is 1, one DMRS port is indicated to be associated with this PTRS port via a PTRS-DMRS association indication field in an uplink DCI0_1/0_2. As shown in Table 1, a bit value of 0 indicates that a first DMRS port scheduled is associated with the PTRS port.

**Table 1**

| Bit value | DMRS port |
|---|---|
| 0 | First DMRS port scheduled |
| 1 | Second DMRS port scheduled |
| 2 | Third DMRS port scheduled |
| 3 | Fourth DMRS port scheduled |

In a case where the maximum number of PTRS ports configured by the high-layer parameter is 2, the network device divides the DMRS port into two groups via the DMRS port corresponding to a sounding reference signal (SRS) resource, and establishes association relationships respectively. As shown in Table 2, one MSB indicates one DMRS port in two DMRS ports that are associated with the PTRS and share a PTRS port 0, and lower 2 bits indicate one DMRS port in two DMRS ports that are associated with the PTRS and share a PTRS port 1.

**Table 2**

| Value of most significant bit (MSB) | DMRS port | | Value of least significant bit (LSB) | DMRS port |
|---|---|---|---|---|
| 0 | First DMRS port sharing PTRS port 0 | | 0 | First DMRS port sharing PTRS port 1 |
| 1 | Second DMRS port sharing PTRS port 0 | | 1 | Second DMRS port sharing PTRS port 1 |

Currently, a communication protocol only supports at most 4 transmission layers in the uplink transmission and at most eight transmission layers in the downlink transmission. A research objective of R18 includes increasing a numeric count of transmission antennas to a maximum number of antennas (8Tx) in the uplink transmission for supporting a higher uplink transmission rate comparable to a downlink transmission rate.

In a case where the terminal in the uplink transmission extends to a transmission with the maximum number of antennas (8Tx), a maximum number of data layers supported may be 8, and an antenna structure of the terminal may also have different antenna port grouping situations. Therefore, an existing association relationship between the PTRS port and the DMRS port also needs to be enhanced for supporting the estimation of the CPE by the PTRS in different scenarios. Currently, the maximum number of PTRS ports is 2. However, in a case where the number of antenna port groups is greater than 2, the current PTRS design will be limited and more phase noise sources may not be estimated. Therefore, it is possible to consider an indication of the association relationship between the PTRS and the DMRS in a case where the PTRS is enhanced and a corresponding PUSCH is transmitted after the terminal in the uplink transmission extends to the transmission with the maximum number of antennas (8Tx).

Based on this, embodiments of the present disclosure provides a method for association indication of the PTRS. Regarding a terminal supporting eight antenna ports and supporting an uplink transmission with a maximum number of transmission layers being 8, an association relationship between the PTRS port and the DMRS port in a case where the terminal sends the PTRS may be determined based on indication information sent by the network device, thereby improving the estimation accuracy of a phase noise source in the scene of a multi-antenna panel.

FIG. 3 is a flow chart illustrating a method for association indication of a PTRS according to an illustrative embodiment. As shown in FIG. 3, the method for the association indication of the PTRS is performed by a network device and includes the following steps.

In step S11, indication information is sent to a terminal via a PTRS-DMRS association indication field in downlink control information (DCI).

The indication information indicates an association relationship between a PTRS port and a DMRS port in a case where the terminal sends the PTRS, and the terminal is a terminal supporting eight antenna ports and supporting an uplink transmission with a maximum number of transmission layers being 8.

In the embodiments of the present disclosure, the network device sends the indication information to the terminal via the PTRS-DMRS association indication field in the DCI, the indication information indicates the association relationship between the PTRS port and the DMRS port in a case where the terminal sends the PTRS, and the terminal is the terminal supporting eight antenna ports and supporting the uplink transmission with the maximum number of transmission layers being 8. Therefore, regarding the terminal supporting eight antenna ports and supporting the uplink transmission with the maximum number of transmission layers being 8, the association relationship between the PTRS port and the DMRS port in a case where the terminal sends the PTRS may be determined according to the indication information sent by the network device, thereby improving the estimation accuracy of a phase noise source in the scene of a multi-antenna panel.

In the method for the association indication of the PTRS provided in embodiments of the present disclosure, different bit values for different bit overheads of the PTRS-DMRS association indication field indicate different association relationships between the PTRS port and the DMRS port.

In the method for the association indication of the PTRS provided in embodiments of the present disclosure, an indication mode of the PTRS-DMRS association indication field is determined based on a transmission mode used by the terminal to perform the uplink transmission.

The indication mode of the PTRS-DMRS association indication field includes a bit overhead of the PTRS-DMRS association indication field and a definition rule of the PTRS-DMRS association indication field.

In the method for the association indication of the PTRS provided in embodiments of the present disclosure, the transmission mode includes a codebook-based fully coherent transmission, a codebook-based partially coherent or non-coherent transmission or a non-codebook-based transmission.

In the method for the association indication of the PTRS provided in embodiments of the present disclosure, the transmission mode includes a codebook-based fully coherent transmission mode, or the transmission mode includes a non-codebook-based transmission mode and corresponds to one antenna port group; and the indication mode of the PTRS-DMRS association indication field is determined based on a numeric count of transmission layers of the terminal.

In a case where the transmission mode includes the codebook-based fully coherent transmission, a sounding reference signal resource indicator (SRI) corresponds to one or more SRS resources corresponding to eight SRS ports of the same spatial correlation filter (i.e., an analog beam transmitted), and the PTRS is sent based on a single PTRS port. Alternatively, in a case where the transmission mode includes the non-codebook-based transmission mode and corresponds to one antenna port group, the PTRS is sent based on the single PTRS port. Regardless of the maximum number of PTRS ports configured by the network device, the indication mode of the PTRS-DMRS association indication field is determined based on the numeric count of transmission layers of the terminal.

In the method for the association indication of the PTRS provided in embodiments of the present disclosure, the indication mode of the PTRS-DMRS association indication field is determined based on a numeric count of actual transmission layers of the terminal.

In an illustrative embodiment, in response to the numeric count of actual transmission layers of the terminal being greater than 4, the bit overhead of the PTRS-DMRS association indication field is 3 bits, and the 3 bits indicate one DMRS port in at most eight DMRS ports scheduled that are associated with the PTRS and share the PTRS port, as shown in Table 3.

**Table 3**

| Bit value | DMRS port |
|---|---|
| 0 | First DMRS port scheduled |
| 1 | Second DMRS port scheduled |
| 2 | Third DMRS port scheduled |
| 3 | Fourth DMRS port scheduled |
| 4 | Fifth DMRS port scheduled |
| 5 | Sixth DMRS port scheduled |
| 6 | Seventh DMRS port scheduled |
| 7 | Eighth DMRS port scheduled |

An an example, in a case where the bit value is 1, the PTRS is associated with the second DMRS port scheduled. As another example, in a case where the bit value is 7, the PTRS is associated with the eighth DMRS port scheduled.

In another illustrative embodiment, in response to the numeric count of actual transmission layers of the terminal being less than or equal to 4, the bit overhead of the PTRS-DMRS association indication field is 2 bits, and the 2 bits indicate one DMRS port in at most four DMRS ports scheduled that are associated with the PTRS and share the PTRS port, as shown in Table 1 above.

In the method for the association indication of the PTRS provided in embodiments of the present disclosure, regardless of a numeric count of transmission layers actually used by the terminal, the bit overhead of the PTRS-DMRS association indication field is fixed to 3 bits as long as the maximum number of transmission layers supported by the terminal is 8.

As an illustrative embodiment, in response to the maximum number of transmission layers supported by the terminal being 8, the bit overhead of the PTRS-DMRS association indication field is 3 bits, and the 3 bits indicate one DMRS port in at most eight DMRS ports that are associated with the PTRS and share the PTRS port, as shown in Table 3 above.

In embodiments of the present disclosure, in a case where the transmission mode includes the codebook-based fully coherent transmission mode, or the transmission mode includes the non-codebook-based transmission mode and corresponds to one antenna port group, the indication mode of the PTRS-DMRS association indication field is determined based on the numeric count of actual transmission layers of the terminal or the maximum number of transmission layers supported by the terminal.

In the method for the association indication of the PTRS provided in embodiments of the present disclosure, in a case where the transmission mode includes a codebook-based partially coherent transmission mode, or the transmission mode includes a codebook-based non-coherent transmission mode, or the transmission mode includes a non-codebook-based transmission mode and corresponds to multiple antenna port groups, the indication mode of the PTRS-DMRS association indication field is determined based on at least one of:
A: the maximum number of transmission layers supported by the terminal or the numeric count of actual transmission layers of the terminal;
B: a maximum number of PTRS ports configured by a radio resource control (RRC) signaling;
C: a numeric count of antenna port groups; or
D: antenna port groups corresponding to an actual transmission layer(s) indicated by the SRI and/or a transmitted precoding matrix indicator (TPMI).

In embodiments of the present disclosure, the indication mode of the PTRS-DMRS association indication field is determined based on A+ B + D, or the indication mode of the PTRS-DMRS association indication field may be determined based on B + C + D.

The determination of the indication mode of the PTRS-DMRS association indication field involved in the present disclosure may be in a variety of combined forms, which are not limited in the present disclosure and are not listed one by one.

Hereinafter, different indication modes of the PTRS-DMRS association indication field will be specifically described.

In the method for the association indication of the PTRS provided in embodiments of the present disclosure, the indication mode of the PTRS-DMRS association indication field is determined based on the maximum number of PTRS ports configured by the RRC signaling and the antenna port groups corresponding to the actual transmission layer(s) indicated by the SRI and/or the TPMI.

In an illustrative embodiment, the PTRS is sent based on the single PTRS port in response to the maximum number of PTRS ports configured by the RRC signaling being 1; or the PTRS is sent based on the single PTRS port in response to the maximum number of PTRS ports configured by the RRC signaling being 2 or 4, and the antenna port groups that correspond to the actual transmission layer(s) indicated by the SRI and/or the TPMI corresponding to the same antenna port group.

In the method for the association indication of the PTRS provided in embodiments of the present disclosure, the indication mode of the PTRS-DMRS association indication field is determined based on the numeric count of transmission layers of the terminal.

In some embodiments, the indication mode of the PTRS-DMRS association indication field is determined based on the numeric count of actual transmission layers of the terminal.

In an illustrative embodiment, in response to the numeric count of actual transmission layers of the terminal being greater than 4, the bit overhead of the PTRS-DMRS association indication field is 3 bits, and the 3 bits indicate one DMRS port in at most eight DMRS ports scheduled that are associated with the PTRS and share the PTRS port, as shown in Table 3 above.

In an another illustrative embodiment, in response to the numeric count of actual transmission layers of the terminal being less than or equal to 4, the bit overhead of the PTRS-DMRS association indication field is 2 bits, and the 2 bits indicate one DMRS port in at most four DMRS ports scheduled that are associated with the PTRS and share the PTRS port, as shown in Table 1 above.

In some other embodiments, regardless of the numeric count of transmission layers actually used by the terminal, the bit overhead of the PTRS-DMRS association indication field is fixed to 3 bits as long as the maximum number of transmission layers supported by the terminal is 8.

In an illustrative embodiment, in response to the maximum number of transmission layers supported by the terminal being 8, the bit overhead of the PTRS-DMRS association indication field is 3 bits, and the 3 bits indicate one DMRS port in at most eight DMRS ports that are associated with the PTRS and share the PTRS port, as shown in Table 3 above.

In the method for the association indication of the PTRS provided in embodiments of the present disclosure, the indication mode of the PTRS-DMRS association indication field is determined based on the maximum number of PTRS ports configured by the RRC signaling, the numeric count of antenna port groups and the antenna port groups corresponding to the actual transmission layer(s) indicated by the SRI and/or the TPMI.

In an illustrative embodiment, in response to the maximum number of PTRS ports configured by the RRC signaling being 2 or 4, the indication mode of the PTRS-DMRS association indication field is determined based on the numeric count of antenna port groups and the antenna port groups corresponding to the actual transmission layer(s) indicated by the SRI and/or the TPMI.

In the method for the association indication of the PTRS provided in embodiments of the present disclosure, a numeric count of PTRS ports actually used is determined based on the numeric count of antenna port groups and the antenna port groups corresponding to the actual transmission layer(s) indicated by the SRI and/or the TPMI; and the indication mode of the PTRS - DMRS association indication field is determined based on the numeric count of PTRS ports actually used.

In an illustrative embodiment, it is determined that the numeric count of PTRS ports actually used is 2 in response to the maximum number of PTRS ports configured by the RRC signaling being 2, the numeric count of the antenna port groups being 2, and the antenna port groups corresponding to the actual transmission layer(s) indicated by the SRI and/or the TPMI being different antenna port groups.

Hereinafter, the determination of the indication mode of the PTRS-DMRS association indication field is described in a case where the numeric count of PTRS ports actually used is 2.

In an implementation of the method for the association indication of the PTRS provided in the embodiments of the present disclosure, the bit overhead of the PTRS-DMRS association indication field is 4 bits in response to the numeric count of PTRS ports actually used being 2.

Two MSBs indicate one DMRS port in four DMRS ports that are associated with the PTRS and share a first PTRS port, and two LSBs indicate one DMRS port in four DMRS ports that are associated with the PTRS and share a second PTRS port, as shown in Table 4.

**Table 4**

| Value of MSB | DMRS port | | Value of LSB | **DMRS** port |
|---|---|---|---|---|
| 0 | First DMRS port sharing PTRS port 0 | | 0 | First DMRS port sharing PTRS port 1 |
| 1 | Second DMRS port sharing PTRS port 0 | | 1 | Second DMRS port sharing PTRS port 1 |
| 2 | Third DMRS port sharing PTRS port 0 | | 2 | Third DMRS port sharing PTRS port 1 |
| 3 | Fourth DMRS port sharing PTRS port 0 | | 3 | Fourth DMRS port sharing PTRS port 1 |

For example, in a case where a value of the MSB is 2 and a value of the LSB is 1, the PTRS port 0 is associated with the third DMRS port sharing the PTRS port 0, and the PTRS port 1 is associated with the first DMRS port sharing the PTRS port 1.

In an implementation of the method for the association indication of the PTRS provided in the embodiments of the present disclosure, the bit overhead of the PTRS-DMRS association indication field is 2 bits in response to the numeric count of PTRS ports actually used being 2.

One MSB indicates one DMRS port associated with a first PTRS port 0, and the one DMRS port associated with the first PTRS port 0 is one DMRS port in first two DMRS antenna ports that are associated with the PTRS and share the first PTRS port; and one LSB indicates one DMRS port associated with a second PTRS port 1, and the one DMRS port associated with the second PTRS port 1 is one DMRS port in first two DMRS antenna ports that are associated with the PTRS and share the second PTRS port 1, As shown in Table 5.

**Table 5**

| Value of MSB | DMRS port | | Value of LSB | **DMRS** port |
|---|---|---|---|---|
| 0 | First DMRS port in first DMRS antenna ports sharing PTRS port 0 | | 0 | First DMRS port in second DMRS antenna ports sharing PTRS port 1 |
| 1 | Second DMRS port in first DMRS antenna ports sharing PTRS port 0 | | 1 | Second DMRS port in second DMRS antenna ports sharing PTRS port 1 |

For example, in a case where the value of the MSB is 0 and the value of the LSB is 1, the PTRS port 0 is associated with the first DMRS port in the first DMRS antenna ports sharing the PTRS port 0, and the PTRS port 1 is associated with the second DMRS port in the second DMRS antenna ports sharing the PTRS port 1.

Hereinafter, the determination of the indication mode of the PTRS-DMRS association indication field is described in a case where the maximum number of PTRS ports configured by the RRC signaling is 2, the numeric count of the antenna port groups is 4, and the antenna port groups corresponding to the actual transmission layer(s) indicated by the SRI and/or the TPMI are different antenna port groups.

In an implementation of the method for the association indication of the PTRS provided in the embodiments of the present disclosure, it is determined that the numeric count of PTRS ports actually used is 2 in response to the maximum number of PTRS ports configured by the RRC signaling being 2, the numeric count of the antenna port groups being 4, and the antenna port groups corresponding to the actual transmission layer(s) indicated by the SRI and/or the TPMI being different antenna port groups.

In some embodiments, it is determined that the bit overhead of the PTRS-DMRS association indication field is 2 bits in response to the antenna port groups corresponding to the actual transmission layer(s) indicated by the SRI and/or the TPMI being two different antenna port groups.

One MSB indicates one DMRS port in two DMRS ports that are associated with the PTRS and share the first PTRS port, and one LSB indicates one DMRS port in two DMRS ports that are associated with the PTRS and share the second PTRS port, as shown in Table 6.

**Table 6**

| Value of MSB | DMRS port | | Value of LSB | DMRS port |
|---|---|---|---|---|
| 0 | First DMRS port sharing PTRS port 0 | | 0 | First DMRS port sharing PTRS port 1 |
| 1 | Second DMRS port sharing PTRS port 0 | | 1 | Second DMRS port sharing PTRS port 1 |

In some other embodiments, it is determined that the bit overhead of the PTRS-DMRS association indication field is 2 bits in response to the antenna port groups corresponding to the actual transmission layer(s) indicated by the SRI and/or the TPMI being more than two different antenna port groups.

The 2 bits indicate DMRS ports scheduled that correspond to the antenna port groups corresponding to first two or last two actual transmission layers, and a numeric count of DMRS ports scheduled is less than or equal to 4, as shown in Table 7.

**Table 7**

| Value of MSB | DMRS port | | Value of LSB | DMRS port |
|---|---|---|---|---|
| 0 | First DMRS port sharing PTRS port 0 in DMRS ports scheduled that correspond to antenna port groups corresponding to first or last actual transmission layer | | 0 | First DMRS port sharing PTRS port 1 in DMRS ports scheduled that correspond to antenna port groups corresponding to second or penultimate actual transmission layer |
| 1 | Second DMRS port sharing PTRS port 0 in DMRS ports scheduled that correspond to antenna port groups corresponding to first or last actual transmission layer | | 1 | Second DMRS port sharing PTRS port 1 in DMRS ports scheduled that correspond to antenna port groups corresponding to second or penultimate actual transmission layer |

For example, in a case where the value of the MSB is 0 and the value of the LSB is 1, the PTRS port 0 is associated with the first DMRS port sharing the PTRS port 0 in the DMRS ports scheduled that correspond to the antenna port groups corresponding to the first actual transmission layer, and the PTRS port 1 is associated with the second DMRS port sharing the PTRS port 1 in the DMRS ports scheduled that correspond to the antenna port groups corresponding to the second actual transmission layer.

Hereinafter, the determination of the indication mode of the PTRS-DMRS association indication field is described in a case where the maximum number of PTRS ports configured by the RRC signaling is 4, the numeric count of the antenna port groups is 2, and the antenna port groups corresponding to the actual transmission layer(s) indicated by the SRI and/or the TPMI are different antenna port groups.

In the method for the association indication of the PTRS provided in embodiments of the present disclosure, it is determined that the numeric count of PTRS ports actually used is 2 in response to the maximum number of PTRS ports configured by the RRC signaling being 4, the numeric count of the antenna port groups being 2, and the antenna port groups corresponding to the actual transmission layer(s) indicated by the SRI and/or the TPMI being different antenna port groups.

In some embodiments, the bit overhead of the PTRS-DMRS association indication field is 4 bits in response to the numeric count of PTRS ports actually used being 2.

The two MSBs indicate one DMRS port in four DMRS ports that are associated with the PTRS and share the first PTRS port, and the two LSBs indicate one DMRS port in four DMRS ports that are associated with the PTRS and share the second PTRS port, as shown in Table 8.

**Table 8**

| Value of MSB | DMRS port | | Value of LSB | DMRS port |
|---|---|---|---|---|
| 0 | First DMRS port sharing PTRS port 0 | | 0 | First DMRS port sharing PTRS port 1 |
| 1 | Second DMRS port sharing PTRS port 0 | | 1 | Second DMRS port sharing PTRS port 1 |
| 2 | Third DMRS port sharing PTRS port 0 | | 2 | Third DMRS port sharing PTRS port 1 |
| 3 | Fourth DMRS port sharing PTRS port 0 | | 3 | Fourth DMRS port sharing PTRS port 1 |

In some other embodiments, the bit overhead of the PTRS-DMRS association indication field is 2 bits in response to the numeric count of PTRS ports actually used being 2.

One MSB indicates one DMRS port associated with the first PTRS port 0, and the one DMRS port associated with the first PTRS port is one DMRS port in the first two DMRS antenna ports that are associated with the PTRS and share the first PTRS port 0; one LSB indicates one DMRS port associated with the second PTRS port 1, and the one DMRS port associated with the second PTRS port 1 is one DMRS port in the first two DMRS antenna ports that are associated with the PTRS and share the second PTRS port 1, as shown in Table 9.

**Table 9**

| Value of MSB | DMRS port | | Value of LSB | DMRS port |
|---|---|---|---|---|
| 0 | First DMRS port in first DMRS antenna ports that share PTRS port 0 | | 0 | First DMRS port in second DMRS antenna ports that share PTRS port 1 |
| 1 | Second DMRS port in first DMRS antenna ports that share PTRS port 0 | | 1 | Second DMRS port in second DMRS antenna ports that share PTRS port 1 |

In the method for the association indication of the PTRS provided in embodiments of the present disclosure, the numeric count of PTRS ports actually used is determined based on the numeric count of antenna port groups and the antenna port groups corresponding to the actual transmission layers indicated by the SRI and the TPMI in a case where the maximum number of PTRS ports configured by the RRC signaling is 4.

In an illustrative embodiment, it is determined that the numeric count of PTRS ports actually used is 1 in response to the maximum number of PTRS ports being 4 and the numeric count of the antenna port groups being 4, and the antenna port groups corresponding to the actual transmission layers indicated by the SRI and the TPMI being one antenna port group.

In another illustrative embodiment, it is determined that the numeric count of PTRS ports actually used is 2 in response to the maximum number of PTRS ports being 4 and the numeric count of the antenna port groups being 4, and the antenna port groups corresponding to the actual transmission layers indicated by the SRI and the TPMI being two different antenna port groups.

In yet another illustrative embodiment, it is determined that the numeric count of PTRS ports actually used is 3 in response to the maximum number of PTRS ports being 4 and the numeric count of the antenna port groups being 4, and the antenna port groups corresponding to the actual transmission layers indicated by the SRI and the TPMI being three different antenna port groups.

In yet another illustrative embodiment, it is determined that the numeric count of PTRS ports actually used is 4 in response to the maximum number of PTRS ports being 4 and the numeric count of the antenna port groups being 4, and the antenna port groups corresponding to the actual transmission layers indicated by the SRI and the TPMI being four different antenna port groups.

In the method for the association indication of the PTRS provided in embodiments of the present disclosure, the bit overhead of the PTRS-DMRS association indication field is determined according to the numeric count of PTRS ports actually used.

In an illustrative embodiment, it is determined that the bit overhead of the PTRS-DMRS association indication field is 1 or 2 or 3 bits in response to the numeric count of PTRS ports actually used being 1.

In another illustrative embodiment, it is determined that the bit overhead of the PTRS-DMRS association indication field is 2 bits in response to the numeric count of PTRS ports actually used being 2.

One MSB indicates one DMRS port in two DMRS ports that are associated with the PTRS and share the first PTRS port, and one LSB indicates one DMRS port in two DMRS ports that are associated with the PTRS and share the second PTRS port, as shown in Table 10.

**Table 10**

| Value of MSB | DMRS port | | Value of LSB | DMRS port |
|---|---|---|---|---|
| 0 | First DMRS port sharing PTRS port 0 | | 0 | First DMRS port sharing PTRS port 1 |
| 1 | Second DMRS port sharing PTRS port 0 | | 1 | Second DMRS port sharing PTRS port 1 |

In yet another illustrative embodiment, it is determined that the bit overhead of the PTRS-DMRS association indication field is 3 bits in response to the numeric count of PTRS ports actually used being 3.

Each bit in the 3 bits indicates a DMRS group sharing the same PTRS port and corresponding to any one antenna port group corresponding to the actual transmission layer(s), as shown in Tables 11 to 13.

**Table 11**

| Bit value of first antenna port group corresponding to actual transmission layer | DMRS port |
|---|---|
| 0 | First DMRS port sharing PTRS port 0 |
| 1 | Second DMRS port sharing PTRS port 0 |

**Table 12**

| Bit value of second antenna port group corresponding to actual transmission layer | DMRS port |
|---|---|
| 0 | First DMRS port sharing PTRS port 1 |
| 1 | Second DMRS port sharing PTRS port 1 |

**Table 13**

| Bit value of third antenna port group corresponding to actual transmission layer | DMRS port |
|---|---|
| 0 | First DMRS port sharing PTRS port 2 |
| 1 | Second DMRS port sharing PTRS port 2 |

In yet another illustrative embodiment, it is determined that the bit overhead of the PTRS-DMRS association indication field is 4 bits in response to the numeric count of PTRS ports actually used being 4.

Each bit in the 4 bits indicates a DMRS group sharing the same PTRS port and corresponding to one antenna port group, as shown in Tables 14 to 17.

**Table 14**

| Bit value of first antenna port group corresponding to actual transmission layer | DMRS port |
|---|---|
| 0 | First DMRS port sharing PTRS port 0 |
| 1 | Second DMRS port sharing PTRS port 0 |

**Table 15**

| Bit value of second antenna port group corresponding to actual transmission layer | DMRS port |
|---|---|
| 0 | First DMRS port sharing PTRS port 1 |
| 1 | Second DMRS port sharing PTRS port 1 |

**Table 16**

| Bit value of third antenna port group corresponding to actual transmission layer | DMRS port |
|---|---|
| 0 | First DMRS port sharing PTRS port 2 |
| 1 | Second DMRS port sharing PTRS port 2 |

**Table 17**

| Bit value of fourth antenna port group corresponding to actual transmission layer | DMRS port |
|---|---|
| 0 | First DMRS port sharing PTRS port 3 |
| 1 | Second DMRS port sharing PTRS port 3 |

In the method for the association indication of the PTRS provided in embodiments of the present disclosure, it is determined that the bit overhead of the PTRS-DMRS association indication field is 1 or 2 or 3 bits in response to the numeric count of PTRS ports actually used being 1.

Since the antenna port group is divided into 4 groups and one antenna port group includes two antenna ports, the PTRS is sent based on the single PTRS port in a case where it is determined that the numeric count of PTRS ports actually used is 1, that is, the PTRS is associated with at most two DMRS ports.

At this time, the bit overhead of the PTRS-DMRS association indication field may be directly determined to be 1 bit, and the 1 bit indicates one DMRS port in at most two DMRS ports that are associated with the PTRS and share the PTRS port. It is also possible to fall back to the indication mode in a case where the PTRS is sent based on the single PTRS port, that is, to determine the bit overhead of the PTRS-DMRS association indication field by the numeric count of actual transmission layers of the terminal or the maximum number of transmission layers supported by the terminal.

In the method for the association indication of the PTRS provided in embodiments of the present disclosure, it is determined that the bit overhead of the PTRS-DMRS association indication field is 1 bit in response to the numeric count of PTRS ports actually used being 1, in which the 1 bit indicates one DMRS port in two DMRS ports that are associated with the PTRS, as shown in Table 18.

**Table 18**

| Bit value | DMRS port |
|---|---|
| 0 | First DMRS port scheduled |
| 1 | Second DMRS port scheduled |

In another illustrative embodiment of the method for the association indication of the PTRS provided in the embodiments of the present disclosure, it is determined that the bit overhead of the PTRS-DMRS association indication field is 2 bits in response to the numeric count of PTRS ports actually used being 1 and the maximum number of transmission layers supported by the terminal being less than or equal to 4, in which the 2 bits indicate one DMRS port in at most two DMRS ports scheduled that are associated with the PTRS and share the PTRS port, as shown in Table 19.

**Table 19**

| Bit value | DMRS port |
|---|---|
| 0 | First DMRS port scheduled that shares the PTRS port |
| 1 | Second DMRS port scheduled that shares the PTRS port |
| 2-3 | Reserved |

In yet another illustrative embodiment of the method for the association indication of the PTRS provided in the embodiments of the present disclosure, it is determined that the bit overhead of the PTRS-DMRS association indication field is 3 bits in response to the numeric count of PTRS ports actually used being 1 and the maximum number of transmission layers supported by the terminal being greater than 4, in which the 3 bits indicate one DMRS port in at most two DMRS ports scheduled that are associated with the PTRS and share the PTRS port, as shown in Table 20.

**Table 20**

| Bit value | DMRS port |
|---|---|
| 0 | First DMRS port scheduled that shares the PTRS port |
| 1 | Second DMRS port scheduled that shares the PTRS port |
| 2-7 | Reserved |

In yet another illustrative embodiment of the method for the association indication of the PTRS provided in the embodiments of the present disclosure, it is determined that the bit overhead of the PTRS-DMRS association indication field is 3 bits in response to the numeric count of PTRS ports actually used being 1 and the maximum number of transmission layers supported by the terminal being 8, in which the 3 bits indicate one DMRS port in at most two DMRS ports that are associated with the PTRS and share the PTRS port, as shown in Table 21.

**Table 21**

| Bit value | DMRS port |
|---|---|
| 0 | First DMRS port scheduled that shares the PTRS port |
| 1 | Second DMRS port scheduled that shares the PTRS port |
| 2-7 | Reserved |

The indication mode of the PTRS-DMRS association indication field is described above in detail in a case where the transmission mode includes the codebook-based partially coherent transmission mode, or the transmission mode includes the codebook-based non-coherent transmission mode, or the transmission mode includes the non-codebook-based transmission mode and corresponds to the multiple antenna port groups.

In the method for the association indication of the PTRS provided in embodiments of the present disclosure, the transmission mode includes the non-codebook-based transmission, the indication mode of the PTRS-DMRS association indication field is determined based on a PTRS port index corresponding to an SRS resource set, the SRS resource set includes at most eight single-port SRS resources, and the PTRS port index indicates an SRS resource sharing the same PTRS port and a DMRS port corresponding to the PTRS port.

In the embodiments of the present disclosure, the terminal supports eight antenna ports and supporting the uplink transmission with the maximum number of transmission layers being 8, and the indication information sent by the network device via the PTRS-DMRS association indication field in the DCI indicates the association relationship between the PTRS port and the DMRS port in a case where the terminal sends the PTRS, thereby improving the estimation accuracy of a phase noise source in the scene of a multi-antenna panel.

FIG. 4 is a flow chart illustrating a method for association indication of a PTRS according to an illustrative embodiment. As shown in FIG. 4, the method for the association indication of the PTRS is performed by a terminal and includes the following steps.

In step S21, indication information sent by a network device via a PTRS-DMRS association indication field in DCI is received.

The indication information indicates an association relationship between a PTRS port and a DMRS port in a case where the terminal sends the PTRS, and the terminal is a terminal supporting eight antenna ports and supporting an uplink transmission with a maximum number of transmission layers being 8.

In the embodiments of the present disclosure, the terminal receives the indication information sent by the network device via the PTRS-DMRS association indication field in the DCI, the indication information indicates the association relationship between the PTRS port and the DMRS port in a case where the terminal sends the PTRS, and the terminal is the terminal supporting eight antenna ports and supporting the uplink transmission with the maximum number of transmission layers being 8. Therefore, regarding the terminal supporting eight antenna ports and supporting the uplink transmission with the maximum number of transmission layers being 8, the association relationship between the PTRS port and the DMRS port in a case where the terminal sends the PTRS may be determined according to the indication information sent by the network device, thereby improving the estimation accuracy of a phase noise source in the scene of a multi-antenna panel.

In the method for the association indication of the PTRS provided in embodiments of the present disclosure, different bit values for different bit overheads of the PTRS-DMRS association indication field indicate different association relationships between the PTRS port and the DMRS port.

In the method for the association indication of the PTRS provided in embodiments of the present disclosure, an indication mode of the PTRS-DMRS association indication field is determined based on a transmission mode used by the terminal to perform the uplink transmission.

The indication mode of the PTRS-DMRS association indication field includes a bit overhead of the PTRS-DMRS association indication field and a definition rule of the PTRS-DMRS association indication field.

In the method for the association indication of the PTRS provided in embodiments of the present disclosure, the transmission mode includes a codebook-based fully coherent transmission, a codebook-based partially coherent or non-coherent transmission or a non-codebook-based transmission.

In the method for the association indication of the PTRS provided in embodiments of the present disclosure, the transmission mode includes a codebook-based fully coherent transmission mode, or the transmission mode includes a non-codebook-based transmission mode and corresponds to one antenna port group; and the indication mode of the PTRS-DMRS association indication field is determined based on a numeric count of transmission layers of the terminal.

In a case where the transmission mode includes the codebook-based fully coherent transmission, an SRI corresponds to one or more SRS resources corresponding to eight SRS ports of the same spatial correlation filter (i.e., an analog beam transmitted), and the PTRS is sent based on a single PTRS port. Alternatively, in a case where the transmission mode includes the non-codebook-based transmission mode and corresponds to one antenna port group, the PTRS is sent based on the single PTRS port. Regardless of the maximum number of PTRS ports configured by the network device, the indication mode of the PTRS-DMRS association indication field is determined based on the numeric count of transmission layers of the terminal.

In the method for the association indication of the PTRS provided in embodiments of the present disclosure, the indication mode of the PTRS-DMRS association indication field is determined based on a numeric count of actual transmission layers of the terminal.

In an illustrative embodiment, in response to the numeric count of actual transmission layers of the terminal being greater than 4, the bit overhead of the PTRS-DMRS association indication field is 3 bits, and the 3 bits indicate one DMRS port in at most eight DMRS ports scheduled that are associated with the PTRS and share the PTRS port, as shown in Table 3 above.

In another illustrative embodiment, in response to the numeric count of actual transmission layers of the terminal being less than or equal to 4, the bit overhead of the PTRS-DMRS association indication field is 2 bits, and the 2 bits indicate one DMRS port in at most four DMRS ports scheduled that are associated with the PTRS and share the PTRS port, as shown in Table 1 above.

In the method for the association indication of the PTRS provided in embodiments of the present disclosure, regardless of a numeric count of transmission layers actually used by the terminal, the bit overhead of the PTRS-DMRS association indication field is fixed to 3 bits as long as the maximum number of transmission layers supported by the terminal is 8.

As an illustrative embodiment, in response to the maximum number of transmission layers supported by the terminal being 8, the bit overhead of the PTRS-DMRS association indication field is 3 bits, and the 3 bits indicate one DMRS port in at most eight DMRS ports that are associated with the PTRS and share the PTRS port, as shown in Table 3 above.

In embodiments of the present disclosure, in a case where the transmission mode includes the codebook-based fully coherent transmission mode, or the transmission mode includes the non-codebook-based transmission mode and corresponds to one antenna port group, the indication mode of the PTRS-DMRS association indication field is determined based on the numeric count of actual transmission layers of the terminal or the maximum number of transmission layers supported by the terminal.

In the method for the association indication of the PTRS provided in embodiments of the present disclosure, in a case where the transmission mode includes a codebook-based partially coherent transmission mode, or the transmission mode includes a codebook-based non-coherent transmission mode, or the transmission mode includes a non-codebook-based transmission mode and corresponds to multiple antenna port groups, the indication mode of the PTRS-DMRS association indication field is determined based on at least one of:
A: the maximum number of transmission layers supported by the terminal or the numeric count of actual transmission layers of the terminal;
B: a maximum number of PTRS ports configured by an RRC signaling;
C: a numeric count of antenna port groups; or
D: antenna port groups corresponding to an actual transmission layer(s) indicated by the SRI and/or a TPMI.

In embodiments of the present disclosure, the indication mode of the PTRS-DMRS association indication field is determined based on A+ B + D, or the indication mode of the PTRS-DMRS association indication field may be determined based on B + C + D.

The determination of the indication mode of the PTRS-DMRS association indication field involved in the present disclosure may be in a variety of combined forms, which are not limited in the present disclosure and are not listed one by one.

Hereinafter, different indication modes of the PTRS-DMRS association indication field will be specifically described.

In the method for the association indication of the PTRS provided in embodiments of the present disclosure, the indication mode of the PTRS-DMRS association indication field is determined based on the maximum number of PTRS ports configured by the RRC signaling and the antenna port groups corresponding to the actual transmission layer(s) indicated by the SRI and/or the TPMI.

In an illustrative embodiment, the PTRS is sent based on the single PTRS port in response to the maximum number of PTRS ports configured by the RRC signaling being 1; or the PTRS is sent based on the single PTRS port in response to the maximum number of PTRS ports configured by the RRC signaling being 2 or 4, and the antenna port groups that correspond to the actual transmission layer(s) indicated by the SRI and/or the TPMI corresponding to the same antenna port group.

In the method for the association indication of the PTRS provided in embodiments of the present disclosure, the indication mode of the PTRS-DMRS association indication field is determined based on the numeric count of transmission layers of the terminal.

In some embodiments, the indication mode of the PTRS-DMRS association indication field is determined based on the numeric count of actual transmission layers of the terminal.

In an illustrative embodiment, in response to the numeric count of actual transmission layers of the terminal being greater than 4, the bit overhead of the PTRS-DMRS association indication field is 3 bits, and the 3 bits indicate one DMRS port in at most eight DMRS ports scheduled that are associated with the PTRS and share the PTRS port, as shown in Table 3 above.

In an another illustrative embodiment, in response to the numeric count of actual transmission layers of the terminal being less than or equal to 4, the bit overhead of the PTRS-DMRS association indication field is 2 bits, and the 2 bits indicate one DMRS port in at most four DMRS ports scheduled that are associated with the PTRS and share the PTRS port, as shown in Table 1 above.

In some other embodiments, regardless of the numeric count of transmission layers actually used by the terminal, the bit overhead of the PTRS-DMRS association indication field is fixed to 3 bits as long as the maximum number of transmission layers supported by the terminal is 8.

In an illustrative embodiment, in response to the maximum number of transmission layers supported by the terminal being 8, the bit overhead of the PTRS-DMRS association indication field is 3 bits, and the 3 bits indicate one DMRS port in at most eight DMRS ports that are associated with the PTRS and share the PTRS port, as shown in Table 3 above.

In the method for the association indication of the PTRS provided in embodiments of the present disclosure, the indication mode of the PTRS-DMRS association indication field is determined based on the maximum number of PTRS ports configured by the RRC signaling, the numeric count of antenna port groups and the antenna port groups corresponding to the actual transmission layer(s) indicated by the SRI and/or the TPMI.

In an illustrative embodiment, in response to the maximum number of PTRS ports configured by the RRC signaling being 2 or 4, the indication mode of the PTRS-DMRS association indication field is determined based on the numeric count of antenna port groups and the antenna port groups corresponding to the actual transmission layer(s) indicated by the SRI and/or the TPMI.

In the method for the association indication of the PTRS provided in embodiments of the present disclosure, a numeric count of PTRS ports actually used is determined based on the numeric count of antenna port groups and the antenna port groups corresponding to the actual transmission layer(s) indicated by the SRI and/or the TPMI; and the indication mode of the PTRS - DMRS association indication field is determined based on the numeric count of PTRS ports actually used.

In an illustrative embodiment, it is determined that the numeric count of PTRS ports actually used is 2 in response to the maximum number of PTRS ports configured by the RRC signaling being 2, the numeric count of the antenna port groups is 2, and the antenna port groups corresponding to the actual transmission layer(s) indicated by the SRI and/or the TPMI are different antenna port groups.

Hereinafter, the determination of the indication mode of the PTRS-DMRS association indication field is described in a case where the numeric count of PTRS ports actually used is 2.

In an implementation of the method for the association indication of the PTRS provided in the embodiments of the present disclosure, the bit overhead of the PTRS-DMRS association indication field is 4 bits in response to the numeric count of PTRS ports actually used being 2.

Two MSBs indicate one DMRS port in four DMRS ports that are associated with the PTRS and share a first PTRS port, and two LSBs indicate one DMRS port in four DMRS ports that are associated with the PTRS and share a second PTRS port, as shown in Table 4 above.

In an implementation of the method for the association indication of the PTRS provided in the embodiments of the present disclosure, the bit overhead of the PTRS-DMRS association indication field is 2 bits in response to the numeric count of PTRS ports actually used being 2.

One MSB indicates one DMRS port associated with a first PTRS port 0, and the one DMRS port associated with the first PTRS port 0 is one DMRS port in first two DMRS antenna ports that are associated with the PTRS and share the first PTRS port; and one LSB indicates one DMRS port associated with a second PTRS port 1, and the one DMRS port associated with the second PTRS port 1 is one DMRS port in first two DMRS antenna ports that are associated with the PTRS and share the second PTRS port 1, as shown in Table 5 above.

Hereinafter, the determination of the indication mode of the PTRS-DMRS association indication field is described in a case where the maximum number of PTRS ports configured by the RRC signaling is 2, the numeric count of the antenna port groups is 4, and the antenna port groups corresponding to the actual transmission layer(s) indicated by the SRI and/or the TPMI are different antenna port groups.

In an implementation of the method for the association indication of the PTRS provided in the embodiments of the present disclosure, it is determined that the numeric count of PTRS ports actually used is 2 in response to the maximum number of PTRS ports configured by the RRC signaling being 2, the numeric count of the antenna port groups being 4, and the antenna port groups corresponding to the actual transmission layer(s) indicated by the SRI and/or the TPMI being different antenna port groups.

In some embodiments, it is determined that the bit overhead of the PTRS-DMRS association indication field is 2 bits in response to the antenna port groups corresponding to the actual transmission layer(s) indicated by the SRI and/or the TPMI being two different antenna port groups.

One MSB indicates one DMRS port in two DMRS ports that are associated with the PTRS and share the first PTRS port, and one LSB indicates one DMRS port in two DMRS ports that are associated with the PTRS and share the second PTRS port, as shown in Table 6 above.

In some other embodiments, it is determined that the bit overhead of the PTRS-DMRS association indication field is 2 bits in response to the antenna port groups corresponding to the actual transmission layer(s) indicated by the SRI and/or the TPMI being more than two different antenna port groups.

The 2 bits indicate DMRS ports scheduled that correspond to the antenna port groups corresponding to first two or last two actual transmission layers, and a numeric count of DMRS ports scheduled is less than or equal to 4, as shown in Table 7 above.

Hereinafter, the determination of the indication mode of the PTRS-DMRS association indication field is described in a case where the maximum number of PTRS ports configured by the RRC signaling is 4, the numeric count of the antenna port groups is 2, and the antenna port groups corresponding to the actual transmission layer(s) indicated by the SRI and/or the TPMI are different antenna port groups.

In the method for the association indication of the PTRS provided in embodiments of the present disclosure, it is determined that the numeric count of PTRS ports actually used is 2 in response to the maximum number of PTRS ports configured by the RRC signaling being 4, the numeric count of the antenna port groups being 2, and the antenna port groups corresponding to the actual transmission layer(s) indicated by the SRI and/or the TPMI being different antenna port groups.

In some embodiments, the bit overhead of the PTRS-DMRS association indication field is 4 bits in response to the numeric count of PTRS ports actually used being 2.

The two MSBs indicate one DMRS port in four DMRS ports that are associated with the PTRS and share the first PTRS port, and the two LSBs indicate one DMRS port in four DMRS ports that are associated with the PTRS and share the second PTRS port, as shown in Table 8 above.

In some other embodiments, the bit overhead of the PTRS-DMRS association indication field is 2 bits in response to the numeric count of PTRS ports actually used being 2.

One MSB indicates one DMRS port associated with the first PTRS port 0, and the one DMRS port associated with the first PTRS port 0 is one DMRS port in the first two DMRS antenna ports that are associated with the PTRS and share the first PTRS port; one LSB indicates one DMRS port associated with the second PTRS port 1, and the one DMRS port associated with the second PTRS port 1 is one DMRS port in the first two DMRS antenna ports that are associated with the PTRS and share the second PTRS port 1, as shown in Table 9 above.

In the method for the association indication of the PTRS provided in embodiments of the present disclosure, the numeric count of PTRS ports actually used is determined based on the numeric count of antenna port groups and the antenna port groups corresponding to the actual transmission layers indicated by the SRI and the TPMI in a case where the maximum number of PTRS ports configured by the RRC signaling is 4.

In an illustrative embodiment, it is determined that the numeric count of PTRS ports actually used is 1 in response to the maximum number of PTRS ports being 4 and the numeric count of the antenna port groups being 4, and the antenna port groups corresponding to the actual transmission layers indicated by the SRI and the TPMI being one antenna port group.

In another illustrative embodiment, it is determined that the numeric count of PTRS ports actually used is 2 in response to the maximum number of PTRS ports being 4 and the numeric count of the antenna port groups being 4, and the antenna port groups corresponding to the actual transmission layers indicated by the SRI and the TPMI being two different antenna port groups.

In yet another illustrative embodiment, it is determined that the numeric count of PTRS ports actually used is 3 in response to the maximum number of PTRS ports being 4 and the numeric count of the antenna port groups being 4, and the antenna port groups corresponding to the actual transmission layers indicated by the SRI and the TPMI being three different antenna port groups.

In yet another illustrative embodiment, it is determined that the numeric count of PTRS ports actually used is 4 in response to the maximum number of PTRS ports being 4 and the numeric count of the antenna port groups being 4, and the antenna port groups corresponding to the actual transmission layers indicated by the SRI and the TPMI being four different antenna port groups.

In the method for the association indication of the PTRS provided in embodiments of the present disclosure, the bit overhead of the PTRS-DMRS association indication field is determined according to the numeric count of PTRS ports actually used.

In an illustrative embodiment, it is determined that the bit overhead of the PTRS-DMRS association indication field is 1 or 2 or 3 bits in response to the numeric count of PTRS ports actually used being 1.

In another illustrative embodiment, it is determined that the bit overhead of the PTRS-DMRS association indication field is 2 bits in response to the numeric count of PTRS ports actually used being 2.

One MSB indicates one DMRS port in two DMRS ports that are associated with the PTRS and share the first PTRS port, and one LSB indicates one DMRS port in two DMRS ports that are associated with the PTRS and share the second PTRS port, as shown in Table 10 above.

In yet another illustrative embodiment, it is determined that the bit overhead of the PTRS-DMRS association indication field is 3 bits in response to the numeric count of PTRS ports actually used being 3.

Each bit in the 3 bits indicates a DMRS group sharing the same PTRS port and corresponding to any one antenna port group corresponding to the actual transmission layer(s), as shown in Tables 11 to 13 above.

In yet another illustrative embodiment, it is determined that the bit overhead of the PTRS-DMRS association indication field is 4 bits in response to the numeric count of PTRS ports actually used being 4.

Each bit in the 4 bits indicates a DMRS group sharing the same PTRS port and corresponding to one antenna port group, as shown in Tables 14 to 17 above.

In the method for the association indication of the PTRS provided in embodiments of the present disclosure, it is determined that the bit overhead of the PTRS-DMRS association indication field is 1 or 2 or 3 bits in response to the numeric count of PTRS ports actually used being 1.

Since the antenna port group is divided into 4 groups and one antenna port group includes two antenna ports, the PTRS is sent based on the single PTRS port in a case where it is determined that the numeric count of PTRS ports actually used is 1, that is, the PTRS is associated with at most two DMRS ports.

At this time, the bit overhead of the PTRS-DMRS association indication field may be directly determined to be 1 bit, and the 1 bit indicates one DMRS port in at most two DMRS ports that are associated with the PTRS and share the PTRS port. It is also possible to fall back to the indication mode in a case where the PTRS is sent based on the single PTRS port, that is, to determine the bit overhead of the PTRS-DMRS association indication field by the numeric count of actual transmission layers of the terminal or the maximum number of transmission layers supported by the terminal.

In the method for the association indication of the PTRS provided in embodiments of the present disclosure, it is determined that the bit overhead of the PTRS-DMRS association indication field is 1 bit in response to the numeric count of PTRS ports actually used being 1, in which the 1 bit indicates one DMRS port in two DMRS ports that are associated with the PTRS, as shown in Table 18 above.

In another illustrative embodiment of the method for the association indication of the PTRS provided in the embodiments of the present disclosure, it is determined that the bit overhead of the PTRS-DMRS association indication field is 2 bits in response to the numeric count of PTRS ports actually used being 1 and the maximum number of transmission layers supported by the terminal being less than or equal to 4, in which the 2 bits indicate one DMRS port in at most two DMRS ports scheduled that are associated with the PTRS and share the PTRS port, as shown in Table 19 above.

In yet another illustrative embodiment of the method for the association indication of the PTRS provided in the embodiments of the present disclosure, it is determined that the bit overhead of the PTRS-DMRS association indication field is 3 bits in response to the numeric count of PTRS ports actually used being 1 and the maximum number of transmission layers supported by the terminal being greater than 4, in which the 3 bits indicate one DMRS port in at most two DMRS ports scheduled that are associated with the PTRS and share the PTRS port, as shown in Table 20 above.

In yet another illustrative embodiment of the method for the association indication of the PTRS provided in the embodiments of the present disclosure, it is determined that the bit overhead of the PTRS-DMRS association indication field is 3 bits in response to the numeric count of PTRS ports actually used being 1 and the maximum number of transmission layers supported by the terminal being 8, in which the 3 bits indicate one DMRS port in at most two DMRS ports that are associated with the PTRS and share the PTRS port, as shown in Table 21 above.

The indication mode of the PTRS-DMRS association indication field is described above in detail in a case where the transmission mode includes the codebook-based partially coherent transmission mode, or the transmission mode includes the codebook-based non-coherent transmission mode, or the transmission mode includes the non-codebook-based transmission mode and corresponds to the multiple antenna port groups.

In the method for the association indication of the PTRS provided in embodiments of the present disclosure, the transmission mode includes the non-codebook-based transmission, the indication mode of the PTRS-DMRS association indication field is determined based on a PTRS port index corresponding to an SRS resource set, the SRS resource set includes at most eight single-port SRS resources, and the PTRS port index indicates an SRS resource sharing the same PTRS port and a DMRS port corresponding to the PTRS port.

The method for the association indication of the PTRS provided in the present disclosure is applicable to a process of the terminal interacting with the network device to implement the association indication of the PTRS. In the process of the terminal interacting with the network device to implement the association indication of the PTRS, the terminal and the network device respectively have relevant functions for implementing the method for the association indication of the PTRS involved in above embodiments, and therefore the description will not be repeated here.

In the embodiments of the present disclosure, the terminal receives the indication information sent by the network device via the PTRS-DMRS association indication field in the DCI, the indication information indicates the association relationship between the PTRS port and the DMRS port in a case where the terminal sends the PTRS, and the terminal is the terminal supporting eight antenna ports and supporting the uplink transmission with the maximum number of transmission layers being 8. Therefore, regarding the terminal supporting eight antenna ports and supporting the uplink transmission with the maximum number of transmission layers being 8, the association relationship between the PTRS port and the DMRS port in a case where the terminal sends the PTRS may be determined according to the indication information sent by the network device, thereby improving the estimation accuracy of the phase noise source in the scene of the multi-antenna panel.

It should be noted that those skilled in the art will appreciate that the various implementations/embodiments in above embodiments of the present disclosure may be used in conjunction with the foregoing embodiments or may be used independently. The principles of the various implementations/embodiments are similar, whether used alone or in conjunction with the foregoing embodiments. In an implementation of the present disclosure, some embodiments are described as embodiments that are used together. Certainly, it will be understood by those skilled in the art that such illustrations are not intended to limit the embodiments of the present disclosure.

Based on the same concept, embodiments of the present disclosure also provide an apparatus for the association indication of the PTRS.

It may be understood that, the apparatus for the association indication of the PTRS provided in the embodiments of the present disclosure includes corresponding hardware structures and/or software modules for performing various functions in order to implement the above-mentioned functions. Embodiments of the present disclosure may be implemented in a form of hardware or a combination of hardware and computer software in combination with units and algorithm steps of each example disclosed in embodiments of the present disclosure. Whether a function is performed by hardware or by hardware driven by computer software depends on specific applications and design constraints of the technical solution. Those skilled in the art may use different methods to implement the described functions for each specific application, but such an implementation should not be regarded as extending beyond the scope of the technical solutions of embodiments of the present disclosure.

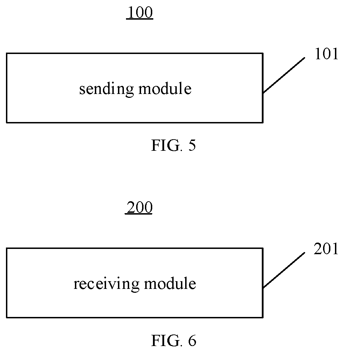

FIG. 5 is a block diagram illustrating an apparatus for association indication of a PTRS according to an illustrative embodiment. Referring to FIG. 5, the apparatus includes a sending module 101. The apparatus 100 for the association indication of the PTRS may be applied to a network device.

The sending module 101 is configured to send indication information to a terminal via a PTRS-DMRS association indication field in DCI, in which the indication information indicates an association relationship between a PTRS port and a DMRS port in a case where the terminal sends the PTRS, and the terminal is a terminal supporting eight antenna ports and supporting an uplink transmission with a maximum number of transmission layers being 8.

In an implementation, different bit values for different bit overheads of the PTRS-DMRS association indication field indicate different association relationships between the PTRS port and the DMRS port.

In an implementation, an indication mode of the PTRS-DMRS association indication field is determined based on a transmission mode used by the terminal to perform the uplink transmission, and the indication mode of the PTRS-DMRS association indication field includes a bit overhead of the PTRS-DMRS association indication field and a definition rule of the PTRS-DMRS association indication field.

In an implementation, the transmission mode includes a codebook-based fully coherent transmission, a codebook-based partially coherent or non-coherent transmission or a non-codebook-based transmission.

In an implementation, the transmission mode includes a codebook-based fully coherent transmission mode, or the transmission mode includes a non-codebook-based transmission mode and corresponds to one antenna port group; and the indication mode of the PTRS-DMRS association indication field is determined based on a numeric count of transmission layers of the terminal.

In an implementation, the PTRS is sent based on a single PTRS port; in response to a numeric count of actual transmission layers of the terminal being greater than 4, the bit overhead of the PTRS-DMRS association indication field is 3 bits, and the 3 bits indicate one DMRS port in at most eight DMRS ports scheduled that are associated with the PTRS and share the PTRS port; or in response to a numeric count of actual transmission layers of the terminal being less than or equal to 4, the bit overhead of the PTRS-DMRS association indication field is 2 bits, and the 2 bits indicate one DMRS port in at most four DMRS ports scheduled that are associated with the PTRS and share the PTRS port.

In an implementation, the PTRS is sent based on a single PTRS port; and in response to the maximum number of transmission layers supported by the terminal being 8, the bit overhead of the PTRS-DMRS association indication field is 3 bits, and the 3 bits indicate one DMRS port in at most eight DMRS ports that are associated with the PTRS and share the PTRS port.

In an implementation, the transmission mode includes a codebook-based partially coherent transmission mode, or the transmission mode includes a codebook-based non-coherent transmission mode, or the transmission mode includes a non-codebook-based transmission mode and corresponds to a plurality of antenna port groups; and the indication mode of the PTRS-DMRS association indication field is determined based on at least one of: the maximum number of transmission layers supported by the terminal or the numeric count of actual transmission layers of the terminal, a maximum number of PTRS ports configured by an RRC signaling, a numeric count of antenna port groups, or antenna port groups corresponding to an actual transmission layer(s) indicated by an SRI and/or a TPMI.

In an implementation, the PTRS is sent based on the single PTRS port in response to the maximum number of PTRS ports configured by the RRC signaling being 1; or the PTRS is sent based on the single PTRS port in response to the maximum number of PTRS ports configured by the RRC signaling being 2 or 4, and the antenna port groups that correspond to the actual transmission layer(s) indicated by the SRI and/or the TPMI corresponding to the same antenna port group.

In an implementation, in response to the numeric count of actual transmission layers of the terminal being greater than 4, the bit overhead of the PTRS-DMRS association indication field is 3 bits, and the 3 bits indicate one DMRS port in at most eight DMRS ports scheduled that are associated with the PTRS and share the PTRS port; or in response to the numeric count of actual transmission layers of the terminal being less than or equal to 4, the bit overhead of the PTRS-DMRS association indication field is 2 bits, and the 2 bits indicate one DMRS port in at most four DMRS ports scheduled that are associated with the PTRS and share the PTRS port.

In an implementation, in response to the maximum number of transmission layers supported by the terminal being 8, the bit overhead of the PTRS-DMRS association indication field is 3 bits, and the 3 bits indicate one DMRS port in at most eight DMRS ports that are associated with the PTRS and share the PTRS port.

In an implementation, in response to the maximum number of PTRS ports configured by the RRC signaling being 2 or 4, the indication mode of the PTRS-DMRS association indication field is determined based on the numeric count of antenna port groups and the antenna port groups corresponding to the actual transmission layer(s) indicated by the SRI and/or the TPMI.

In an implementation, determining the indication mode of the PTRS-DMRS association indication field based on the numeric count of antenna port groups and the antenna port groups corresponding to the actual transmission layer(s) indicated by the SRI and/or the TPMI includes: determining a numeric count of PTRS ports actually used based on the numeric count of antenna port groups and the antenna port groups corresponding to the actual transmission layer(s) indicated by the SRI and/or the TPMI; and determining the indication mode of the PTRS-DMRS association indication field based on the numeric count of PTRS ports actually used.

In an implementation, determining the numeric count of PTRS ports actually used based on the numeric count of antenna port groups and the antenna port groups corresponding to the actual transmission layer(s) indicated by the SRI and/or the TPMI includes: determining that the numeric count of PTRS ports actually used is 2 in response to the maximum number of PTRS ports configured by the RRC signaling being 2, the numeric count of the antenna port groups being 2, and the antenna port groups corresponding to the actual transmission layer(s) indicated by the SRI and/or the TPMI being different antenna port groups.

In an implementation, determining the indication mode of the PTRS-DMRS association indication field based on the numeric count of PTRS ports actually used includes: the bit overhead of the PTRS-DMRS association indication field being 4 bits in response to the numeric count of PTRS ports actually used being 2, in which two MSBs indicate one DMRS port in four DMRS ports that are associated with the PTRS and share a first PTRS port, and two LSBs indicate one DMRS port in four DMRS ports that are associated with the PTRS and share a second PTRS port; or the bit overhead of the PTRS-DMRS association indication field being 2 bits in response to the numeric count of PTRS ports actually used being 2, in which one MSB indicates one DMRS port associated with a first PTRS port 0, and the one DMRS port associated with the first PTRS port 0 is one DMRS port in first two DMRS antenna ports that are associated with the PTRS and share the first PTRS port 0; and one LSB indicates one DMRS port associated with a second PTRS port 1, and the one DMRS port associated with the second PTRS port 1 is one DMRS port in first two DMRS antenna ports that are associated with the PTRS and share the second PTRS port 1.

In an implementation, determining the numeric count of PTRS ports actually used based on the numeric count of antenna port groups and the antenna port groups corresponding to the actual transmission layer(s) indicated by the SRI and/or the TPMI includes: determining that the numeric count of PTRS ports actually used is 2 in response to the maximum number of PTRS ports configured by the RRC signaling being 2, the numeric count of the antenna port groups being 4, and the antenna port groups corresponding to the actual transmission layer(s) indicated by the SRI and/or the TPMI being different antenna port groups.

In an implementation, determining the indication mode of the PTRS-DMRS association indication field based on the numeric count of PTRS ports actually used includes: determining that the bit overhead of the PTRS-DMRS association indication field is 2 bits in response to the antenna port groups corresponding to the actual transmission layer(s) indicated by the SRI and/or the TPMI being two different antenna port groups, in which one MSB indicates one DMRS port in two DMRS ports that are associated with the PTRS and share the first PTRS port, and one LSB indicates one DMRS port in two DMRS ports that are associated with the PTRS and share the second PTRS port; or determining that the bit overhead of the PTRS-DMRS association indication field is 2 bits in response to the antenna port groups corresponding to the actual transmission layer(s) indicated by the SRI and/or the TPMI being more than two different antenna port groups, in which the 2 bits indicate DMRS ports scheduled that correspond to the antenna port groups corresponding to first two or last two actual transmission layers, and a numeric count of DMRS ports scheduled is less than or equal to 4.

In an implementation, determining the numeric count of PTRS ports actually used based on the numeric count of antenna port groups and the antenna port groups corresponding to the actual transmission layer(s) indicated by the SRI and/or the TPMI includes: determining that the numeric count of PTRS ports actually used is 2 in response to the maximum number of PTRS ports configured by the RRC signaling being 4, the numeric count of the antenna port groups being 2, and the antenna port groups corresponding to the actual transmission layer(s) indicated by the SRI and/or the TPMI being different antenna port groups.

In an implementation, determining the indication mode of the PTRS-DMRS association indication field based on the numeric count of PTRS ports actually used includes: the bit overhead of the PTRS-DMRS association indication field being 4 bits in response to the numeric count of PTRS ports actually used being 2, in which the two MSBs indicate one DMRS port in four DMRS ports that are associated with the PTRS and share the first PTRS port, and the two LSBs indicate one DMRS port in four DMRS ports that are associated with the PTRS and share the second PTRS port; or the bit overhead of the PTRS-DMRS association indication field being 2 bits in response to the numeric count of PTRS ports actually used being 2, in which one MSB indicates one DMRS port associated with the first PTRS port 0, and the one DMRS port associated with the first PTRS port 0 is one DMRS port in first two DMRS antenna ports that are associated with the PTRS and share the first PTRS port 0; one LSB indicates one DMRS port associated with the second PTRS port 1, and the one DMRS port associated with the second PTRS port 1 is one DMRS port in first two DMRS antenna ports that are associated with the PTRS and share the second PTRS port 1.

In an implementation, determining the numeric count of PTRS ports actually used based on the numeric count of antenna port groups and the antenna port groups corresponding to the actual transmission layers indicated by the SRI and the TPMI includes: determining that the numeric count of PTRS ports actually used is 1 in response to the maximum number of PTRS ports being 4 and the numeric count of the antenna port groups being 4, and the antenna port groups corresponding to the actual transmission layers indicated by the SRI and the TPMI being one antenna port group; determining that the numeric count of PTRS ports actually used is 2 in response to the maximum number of PTRS ports being 4 and the numeric count of the antenna port groups being 4, and the antenna port groups corresponding to the actual transmission layers indicated by the SRI and the TPMI being two different antenna port groups; determining that the numeric count of PTRS ports actually used is 3 in response to the maximum number of PTRS ports being 4 and the numeric count of the antenna port groups being 4, and the antenna port groups corresponding to the actual transmission layers indicated by the SRI and the TPMI being three different antenna port groups; or determining that the numeric count of PTRS ports actually used is 4 in response to the maximum number of PTRS ports being 4 and the numeric count of the antenna port groups being 4, and the antenna port groups corresponding to the actual transmission layers indicated by the SRI and the TPMI being four different antenna port groups.

In an implementation, determining the bit overhead of the PTRS-DMRS association indication field according to the numeric count of PTRS ports actually used includes: determining that the bit overhead of the PTRS-DMRS association indication field is 1 or 2 or 3 bits in response to the numeric count of PTRS ports actually used being 1; or determining that the bit overhead of the PTRS-DMRS association indication field is 2 bits in response to the numeric count of PTRS ports actually used being 2, in which one MSB indicates one DMRS port in two DMRS ports that are associated with the PTRS and share the first PTRS port, and one LSB indicates one DMRS port in two DMRS ports that are associated with the PTRS and share the second PTRS port; or determining that the bit overhead of the PTRS-DMRS association indication field is 3 bits in response to the numeric count of PTRS ports actually used being 3, in which each bit in the 3 bits indicates a DMRS group sharing the same PTRS port and corresponding to any one antenna port group corresponding to the actual transmission layer(s); or determining that the bit overhead of the PTRS-DMRS association indication field is 4 bits in response to the numeric count of PTRS ports actually used being 4, in which each bit in the 4 bits indicates a DMRS group sharing the same PTRS port and corresponding to one antenna port group.

In an implementation, determining that the bit overhead of the PTRS-DMRS association indication field is 1 or 2 or 3 bits in response to the numeric count of PTRS ports actually used being 1 includes: determining that the bit overhead of the PTRS-DMRS association indication field is 1 bit in response to the numeric count of PTRS ports actually used being 1, in which the 1 bit indicates one DMRS port in at most two DMRS ports that are associated with the PTRS and share the PTRS port; or determining that the bit overhead of the PTRS-DMRS association indication field is 2 bits in response to the numeric count of PTRS ports actually used being 1 and the maximum number of transmission layers supported by the terminal being less than or equal to 4, in which the 2 bits indicate one DMRS port in at most two DMRS ports scheduled that are associated with the PTRS and share the PTRS port; or determining that the bit overhead of the PTRS-DMRS association indication field is 3 bits in response to the numeric count of PTRS ports actually used being 1 and the maximum number of transmission layers supported by the terminal being greater than 4, in which the 3 bits indicate one DMRS port in at most two DMRS ports scheduled that are associated with the PTRS and share the PTRS port; or determining that the bit overhead of the PTRS-DMRS association indication field is 3 bits in response to the numeric count of PTRS ports actually used being 1 and the maximum number of transmission layers supported by the terminal being 8, in which the 3 bits indicate one DMRS port in at most two DMRS ports that are associated with the PTRS and share the PTRS port.

In an implementation, the transmission mode includes the non-codebook-based transmission, the indication mode of the PTRS-DMRS association indication field is determined based on a PTRS port index corresponding to an SRS resource set, the SRS resource set includes at most eight single-port SRS resources, and the PTRS port index indicates an SRS resource sharing the same PTRS port and a DMRS port corresponding to the PTRS port.

FIG. 6 is a block diagram illustrating an apparatus for association indication of a PTRS according to an illustrative embodiment. Referring to FIG. 6, the apparatus includes a receiving module 201. The apparatus 200 for the association indication of the PTRS may be applied to a terminal.

The receiving module 201 is configured to receive indication information sent by a network device via a PTRS-DMRS association indication field in DCI, in which the indication information indicates an association relationship between a PTRS port and a DMRS port in a case where the terminal sends the PTRS, and the terminal is a terminal supporting eight antenna ports and supporting an uplink transmission with a maximum number of transmission layers being 8.

In an implementation, different bit values for different bit overheads of the PTRS-DMRS association indication field indicate different association relationships between the PTRS port and the DMRS port.

In an implementation, an indication mode of the PTRS-DMRS association indication field is determined based on a transmission mode used by the terminal to perform the uplink transmission, and the indication mode of the PTRS-DMRS association indication field includes a bit overhead of the PTRS-DMRS association indication field and a definition rule of the PTRS-DMRS association indication field.

In an implementation, the transmission mode includes a codebook-based fully coherent transmission, a codebook-based partially coherent or non-coherent transmission or a non-codebook-based transmission.

In an implementation, the transmission mode includes a codebook-based fully coherent transmission mode, or the transmission mode includes a non-codebook-based transmission mode and corresponds to one antenna port group; and the indication mode of the PTRS-DMRS association indication field is determined based on a numeric count of transmission layers of the terminal.

In an implementation, the PTRS is sent based on a single PTRS port; in response to a numeric count of actual transmission layers of the terminal being greater than 4, the bit overhead of the PTRS-DMRS association indication field is 3 bits, and the 3 bits indicate one DMRS port in at most eight DMRS ports scheduled that are associated with the PTRS and share the PTRS port; or in response to a numeric count of actual transmission layers of the terminal being less than or equal to 4, the bit overhead of the PTRS-DMRS association indication field is 2 bits, and the 2 bits indicate one DMRS port in at most four DMRS ports scheduled that are associated with the PTRS and share the PTRS port.

In an implementation, the PTRS is sent based on a single PTRS port; and in response to the maximum number of transmission layers supported by the terminal being 8, the bit overhead of the PTRS-DMRS association indication field is 3 bits, and the 3 bits indicate one DMRS port in at most eight DMRS ports that are associated with the PTRS and share the PTRS port.

In an implementation, the transmission mode includes a codebook-based partially coherent transmission mode, or the transmission mode includes a codebook-based non-coherent transmission mode, or the transmission mode includes a non-codebook-based transmission mode and corresponds to a plurality of antenna port groups; and the indication mode of the PTRS-DMRS association indication field is determined based on at least one of: the maximum number of transmission layers supported by the terminal or the numeric count of actual transmission layers of the terminal, a maximum number of PTRS ports configured by an RRC signaling, a numeric count of antenna port groups, or antenna port groups corresponding to an actual transmission layer(s) indicated by an SRI and/or a TPMI.

In an implementation, the PTRS is sent based on the single PTRS port in response to the maximum number of PTRS ports configured by the RRC signaling being 1; or the PTRS is sent based on the single PTRS port in response to the maximum number of PTRS ports configured by the RRC signaling being 2 or 4, and the antenna port groups that correspond to the actual transmission layer(s) indicated by the SRI and/or the TPMI corresponding to the same antenna port group.

In an implementation, in response to the numeric count of actual transmission layers of the terminal being greater than 4, the bit overhead of the PTRS-DMRS association indication field is 3 bits, and the 3 bits indicate one DMRS port in at most eight DMRS ports scheduled that are associated with the PTRS and share the PTRS port; or in response to the numeric count of actual transmission layers of the terminal being less than or equal to 4, the bit overhead of the PTRS-DMRS association indication field is 2 bits, and the 2 bits indicate one DMRS port in at most four DMRS ports scheduled that are associated with the PTRS and share the PTRS port.

In an implementation, in response to the maximum number of transmission layers supported by the terminal being 8, the bit overhead of the PTRS-DMRS association indication field is 3 bits, and the 3 bits indicate one DMRS port in at most eight DMRS ports that are associated with the PTRS and share the PTRS port.

In an implementation, in response to the maximum number of PTRS ports configured by the RRC signaling being 2 or 4, the indication mode of the PTRS-DMRS association indication field is determined based on the numeric count of antenna port groups and the antenna port groups corresponding to the actual transmission layer(s) indicated by the SRI and/or the TPMI.

In an implementation, determining the indication mode of the PTRS-DMRS association indication field based on the numeric count of antenna port groups and the antenna port groups corresponding to the actual transmission layer(s) indicated by the SRI and/or the TPMI includes: determining a numeric count of PTRS ports actually used based on the numeric count of antenna port groups and the antenna port groups corresponding to the actual transmission layer(s) indicated by the SRI and/or the TPMI; and determining the indication mode of the PTRS-DMRS association indication field based on the numeric count of PTRS ports actually used.

In an implementation, determining the numeric count of PTRS ports actually used based on the numeric count of antenna port groups and the antenna port groups corresponding to the actual transmission layer(s) indicated by the SRI and/or the TPMI includes: determining that the numeric count of PTRS ports actually used is 2 in response to the maximum number of PTRS ports configured by the RRC signaling being 2, the numeric count of the antenna port groups being 2, and the antenna port groups corresponding to the actual transmission layer(s) indicated by the SRI and/or the TPMI being different antenna port groups.

In an implementation, determining the indication mode of the PTRS-DMRS association indication field based on the numeric count of PTRS ports actually used includes: the bit overhead of the PTRS-DMRS association indication field being 4 bits in response to the numeric count of PTRS ports actually used being 2, in which two MSBs indicate one DMRS port in four DMRS ports that are associated with the PTRS and share a first PTRS port, and two LSBs indicate one DMRS port in four DMRS ports that are associated with the PTRS and share a second PTRS port; or the bit overhead of the PTRS-DMRS association indication field being 2 bits in response to the numeric count of PTRS ports actually used being 2, in which one MSB indicates one DMRS port associated with a first PTRS port 0, and the one DMRS port associated with the first PTRS port 0 is one DMRS port in first two DMRS antenna ports that are associated with the PTRS and share the first PTRS port 0; and one LSB indicates one DMRS port associated with a second PTRS port 1, and the one DMRS port associated with the second PTRS port 1 is one DMRS port in first two DMRS antenna ports that are associated with the PTRS and share the second PTRS port 1.

In an implementation, determining the numeric count of PTRS ports actually used based on the numeric count of antenna port groups and the antenna port groups corresponding to the actual transmission layer(s) indicated by the SRI and/or the TPMI includes: determining that the numeric count of PTRS ports actually used is 2 in response to the maximum number of PTRS ports configured by the RRC signaling being 2, the numeric count of the antenna port groups being 4, and the antenna port groups corresponding to the actual transmission layer(s) indicated by the SRI and/or the TPMI being different antenna port groups.

In an implementation, determining the indication mode of the PTRS-DMRS association indication field based on the numeric count of PTRS ports actually used includes: determining that the bit overhead of the PTRS-DMRS association indication field is 2 bits in response to the antenna port groups corresponding to the actual transmission layer(s) indicated by the SRI and/or the TPMI being two different antenna port groups, in which one MSB indicates one DMRS port in two DMRS ports that are associated with the PTRS and share the first PTRS port, and one LSB indicates one DMRS port in two DMRS ports that are associated with the PTRS and share the second PTRS port; or determining that the bit overhead of the PTRS-DMRS association indication field is 2 bits in response to the antenna port groups corresponding to the actual transmission layer(s) indicated by the SRI and/or the TPMI being more than two different antenna port groups, in which the 2 bits indicate DMRS ports scheduled that correspond to the antenna port groups corresponding to first two or last two actual transmission layers, and a numeric count of DMRS ports scheduled is less than or equal to 4.

In an implementation, determining the numeric count of PTRS ports actually used based on the numeric count of antenna port groups and the antenna port groups corresponding to the actual transmission layer(s) indicated by the SRI and/or the TPMI includes: determining that the numeric count of PTRS ports actually used is 2 in response to the maximum number of PTRS ports configured by the RRC signaling being 4, the numeric count of the antenna port groups being 2, and the antenna port groups corresponding to the actual transmission layer(s) indicated by the SRI and/or the TPMI being different antenna port groups.

In an implementation, determining the indication mode of the PTRS-DMRS association indication field based on the numeric count of PTRS ports actually used includes: the bit overhead of the PTRS-DMRS association indication field being 4 bits in response to the numeric count of PTRS ports actually used being 2, in which the two MSBs indicate one DMRS port in four DMRS ports that are associated with the PTRS and share the first PTRS port, and the two LSBs indicate one DMRS port in four DMRS ports that are associated with the PTRS and share the second PTRS port; or the bit overhead of the PTRS-DMRS association indication field being 2 bits in response to the numeric count of PTRS ports actually used being 2, in which one MSB indicates one DMRS port associated with the first PTRS port 0, and the one DMRS port associated with the first PTRS port 0 is one DMRS port in first two DMRS antenna ports that are associated with the PTRS and share the first PTRS port 0; one LSB indicates one DMRS port associated with the second PTRS port 1, and the one DMRS port associated with the second PTRS port 1 is one DMRS port in first two DMRS antenna ports that are associated with the PTRS and share the second PTRS port 1.

In an implementation, determining the numeric count of PTRS ports actually used based on the numeric count of antenna port groups and the antenna port groups corresponding to the actual transmission layers indicated by the SRI and the TPMI includes: determining that the numeric count of PTRS ports actually used is 1 in response to the maximum number of PTRS ports being 4 and the numeric count of the antenna port groups being 4, and the antenna port groups corresponding to the actual transmission layers indicated by the SRI and the TPMI being one antenna port group; determining that the numeric count of PTRS ports actually used is 2 in response to the maximum number of PTRS ports being 4 and the numeric count of the antenna port groups being 4, and the antenna port groups corresponding to the actual transmission layers indicated by the SRI and the TPMI being two different antenna port groups; determining that the numeric count of PTRS ports actually used is 3 in response to the maximum number of PTRS ports being 4 and the numeric count of the antenna port groups being 4, and the antenna port groups corresponding to the actual transmission layers indicated by the SRI and the TPMI being three different antenna port groups; or determining that the numeric count of PTRS ports actually used is 4 in response to the maximum number of PTRS ports being 4 and the numeric count of the antenna port groups being 4, and the antenna port groups corresponding to the actual transmission layers indicated by the SRI and the TPMI being four different antenna port groups.

In an implementation, determining the bit overhead of the PTRS-DMRS association indication field according to the numeric count of PTRS ports actually used includes: determining that the bit overhead of the PTRS-DMRS association indication field is 1 or 2 or 3 bits in response to the numeric count of PTRS ports actually used being 1; or determining that the bit overhead of the PTRS-DMRS association indication field is 2 bits in response to the numeric count of PTRS ports actually used being 2, in which one MSB indicates one DMRS port in two DMRS ports that are associated with the PTRS and share the first PTRS port, and one LSB indicates one DMRS port in two DMRS ports that are associated with the PTRS and share the second PTRS port; or determining that the bit overhead of the PTRS-DMRS association indication field is 3 bits in response to the numeric count of PTRS ports actually used being 3, in which each bit in the 3 bits indicates a DMRS group sharing the same PTRS port and corresponding to any one antenna port group corresponding to the actual transmission layer(s); or determining that the bit overhead of the PTRS-DMRS association indication field is 4 bits in response to the numeric count of PTRS ports actually used being 4, in which each bit in the 4 bits indicates a DMRS group sharing the same PTRS port and corresponding to one antenna port group.

In an implementation, determining that the bit overhead of the PTRS-DMRS association indication field is 1 or 2 or 3 bits in response to the numeric count of PTRS ports actually used being 1 includes: determining that the bit overhead of the PTRS-DMRS association indication field is 1 bit in response to the numeric count of PTRS ports actually used being 1, in which the 1 bit indicates one DMRS port in at most two DMRS ports that are associated with the PTRS and share the PTRS port; or determining that the bit overhead of the PTRS-DMRS association indication field is 2 bits in response to the numeric count of PTRS ports actually used being 1 and the maximum number of transmission layers supported by the terminal being less than or equal to 4, in which the 2 bits indicate one DMRS port in at most two DMRS ports scheduled that are associated with the PTRS and share the PTRS port; or determining that the bit overhead of the PTRS-DMRS association indication field is 3 bits in response to the numeric count of PTRS ports actually used being 1 and the maximum number of transmission layers supported by the terminal being greater than 4, in which the 3 bits indicate one DMRS port in at most two DMRS ports scheduled that are associated with the PTRS and share the PTRS port; or determining that the bit overhead of the PTRS-DMRS association indication field is 3 bits in response to the numeric count of PTRS ports actually used being 1 and the maximum number of transmission layers supported by the terminal being 8, in which the 3 bits indicate one DMRS port in at most two DMRS ports that are associated with the PTRS and share the PTRS port.

In an implementation, the transmission mode includes the non-codebook-based transmission, the indication mode of the PTRS-DMRS association indication field is determined based on a PTRS port index corresponding to an SRS resource set, the SRS resource set includes at most eight single-port SRS resources, and the PTRS port index indicates an SRS resource sharing the same PTRS port and a DMRS port corresponding to the PTRS port.

It should be noted that the respective modules/units involved in the apparatus 100 for the association indication of the PTRS and the apparatus 200 for the association indication of the PTRS according to the embodiments of the present disclosure are merely exemplary and are not to be construed as limiting the present disclosure. For example, the apparatus 100 for the association indication of the PTRS in the embodiments of the present disclosure may further include a receiving unit and/or a processing unit. The apparatus 200 for the association indication of the PTRS may further include a sending unit and/or a processing unit. The units included in the apparatus 100 for the association indication of the PTRS and the apparatus 200 for the association indication of the PTRS may interact with each other, and may also interact with other network element devices.

With respect to the devices in the above embodiments, the specific manners for performing operations for individual modules therein have been described in detail in the embodiments regarding the method, which will not be elaborated herein.

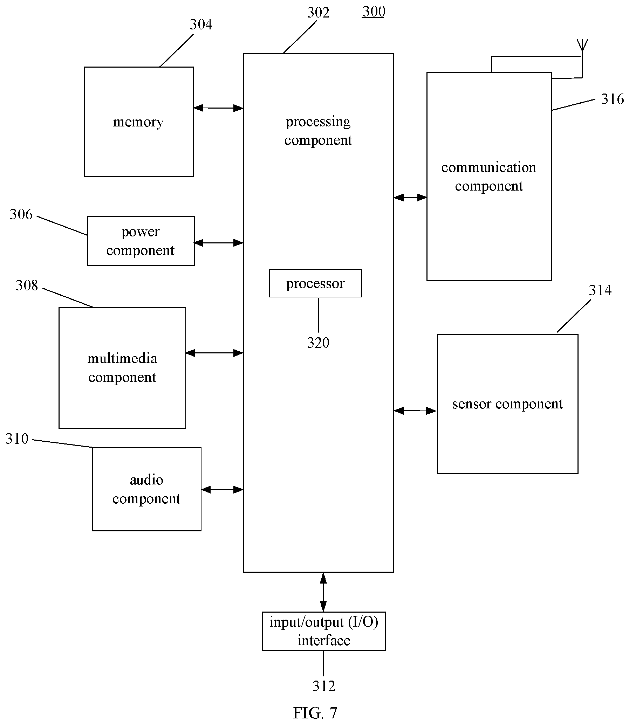

FIG. 7 is a block diagram illustrating a device for association indication of a PTRS according to an illustrative embodiment. For example, the device 300 may be a mobile phone, a computer, a digital broadcast terminal, a messaging device, a game console, a tablet device, a medical device, a fitness device, a personal digital assistant, or the like.

Referring to FIG. 7, the device 300 may include one or more of the following components: a processing component 302, a memory 304, a power component 306, a multimedia component 308, an audio component 310, an input/output (I/O) interface 312, a sensor component 314, and a communication component 316.

The processing component 302 typically controls overall operations of the device 300, such as the operations associated with display, phone calls, data communications, camera operations, and recording operations. The processing component 302 may include one or more processors 320 to execute instructions to perform all or some of the steps in the above-described methods. Moreover, the processing component 302 may include one or more modules which facilitate the interaction between the processing component 302 and other components. For instance, the processing component 302 may include a multimedia module to facilitate the interaction between the multimedia component 308 and the processing component 302.

The memory 304 is configured to store various types of data to support the operation of the device 300. Examples of such data include instructions for any applications or methods operated on the device 300, contact data, phonebook data, messages, pictures, videos, etc. The memory 304 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 306 provides power to various components of the device 300. The power component 306 may include a power management system, one or more power sources, and any other components associated with the generation, management, and distribution of power in the device 300.

The multimedia component 308 includes a screen providing an output interface between the device 300 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 308 includes a front camera and/or a rear camera. The front camera and/or the rear camera may receive an external multimedia datum while the device 300 is in an operation mode, such as a photographing mode or a video mode. Each of the front camera and the rear camera may be a fixed optical lens system or have focus and optical zoom capability.

The audio component 310 is configured to output and/or input audio signals. For example, the audio component 310 includes a microphone (MIC) configured to receive an external audio signal when the device 300 is in an operation mode, such as a call mode, a recording mode, and a voice recognition mode. The received audio signal may be further stored in the memory 304 or transmitted via the communication component 316. In some embodiments, the audio component 310 further includes a speaker to output audio signals.

The I/O interface 312 provides an interface between the processing component 302 and peripheral interface modules, such as keyboards, click wheels, buttons, and the like. The buttons may include, but are not limited to, a home button, a volume button, a starting button, and a locking button.

The sensor component 314 includes one or more sensors to provide status assessments of various aspects of the device 300. For instance, the sensor component 314 may detect an open/closed status of the device 300, relative positioning of components, e.g., the display and the keypad, of the device 300, a change in position of the device 300 or a component of the device 300, a presence or absence of user contact with the device 300, an orientation or an acceleration/deceleration of the device 300, and a change in temperature of the device 300. The sensor component 314 may include a proximity sensor configured to detect the presence of nearby objects without any physical contact. The sensor component 314 may further include a light sensor, such as a CMOS or CCD image sensor, for use in imaging applications. In some embodiments, the sensor component 314 may further include an accelerometer sensor, a gyroscope sensor, a magnetic sensor, a pressure sensor, or a temperature sensor.

The communication component 316 is configured to facilitate communication, wired or wireless, between the device 300 and other devices. The device 300 may access a wireless network based on a communication standard, such as Wi-Fi, 2G, or 3G, or a combination thereof. In an illustrative embodiment, the communication component 316 receives a broadcast signal or broadcast associated information from an external broadcast management system via a broadcast channel. In an illustrative embodiment, the communication component 316 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In an illustrative embodiment, the device 300 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic elements, for performing the above-mentioned methods.

In an illustrative embodiment, there is also provided a non-transitory computer-readable storage medium including instructions, such as included in the memory 304, executable by the processor 320 in the device 300, for completing the above-mentioned methods. For example, the non-transitory computer-readable storage medium may be a ROM, a random access memory (RAM), a CD-ROM, a magnetic tape, a floppy disc, an optical data storage device, and the like.

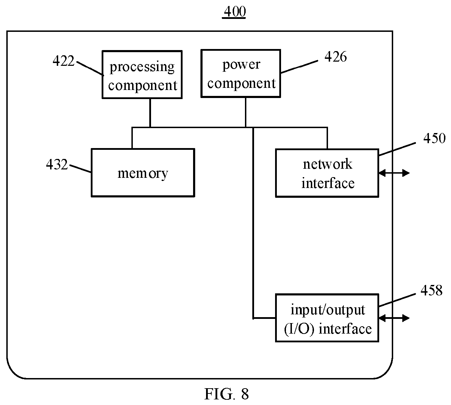

FIG. 8 is a block diagram illustrating a device for association indication of a PTRS according to an illustrative embodiment. For example, the device 400 may be provided as a network device. Referring to FIG. 8, the device 400 includes a processing component 422 and a memory resource represented by a memory 432. The processing component 422 may further include one or more processors. The memory 432 is configured to store instructions executable by the processing component 422, such as an application program. The application program stored in the memory 432 may include one or more modules each corresponding to a set of instructions. In addition, the processing component 422 is configured to execute the instructions to perform the above-mentioned methods.

The device 400 further includes a power component 426 configured to perform a power management on the device 400, a wired or wireless network interface 450 configured to connect the device 400 to the network, and an input/output (I/O) interface 458. The device 400 may operate an operating system stored in the memory 432, such as Windows Server TM, Mac OS XTM, Unix TM, Linux TM, Free BSDTM, or the like.

In an illustrative embodiment, there is also provided a non-transitory computer readable storage medium including instructions, such as included in the memory 432, executable by the processing component 422 in the device 400, for completing the above-mentioned methods. For example, the non-transitory computer-readable storage medium may be a ROM, a random access memory (RAM), a CD-ROM, a magnetic tape, a floppy disc, an optical data storage device, and the like.

It is further understood that "a plurality" in this disclosure refers to two or more, and other quantifiers are similar thereto. "And/or", which describes an associated relationship of associated objects, means that there may be three relationships, for example, A and/or B, which may mean that A exists alone, A and B exist at the same time, and B exists alone. A character "/" generally indicates that contextual objects are in an "or" relationship. "A/an" and "the" in singular forms are intended to include plural forms, unless clearly indicated in the context otherwise.

It is further understood that the meaning of terms such as "in response to", "if", and the like involved in the present disclosure will depend on the context and the actual use scenario. As used herein, the term "in response to" may be construed to mean "when" or "upon" or "if" depending on the context.

It is further understood that terms such as "first", and "second" are used to describe various information, these information should not be limited by these terms. These terms are only used for distinguishing information of the same type from each other and do not denote a particular order or degree of importance. As a matter of fact, the terms such as "first", and "second" may be used interchangeably. For example, first information may also be referred to as second information, and similarly, the second information may also be referred to as the first information, without departing from the scope of embodiments of the present disclosure.

It is further understood that although operations are described in a specific order in the accompanying drawings in the embodiments of the present disclosure, it should not be understood that these operations are required to be performed in the specific order shown or in a serial order, or that all of the operations shown are required to be performed to obtain desired results. In certain circumstances, multitasking and parallel processing may be advantageous.

Other embodiments of the present disclosure will be apparent to those skilled in the art from consideration of the specification and practice of the present disclosure disclosed here. The present disclosure is intended to cover any variations, uses, or adaptations of the present disclosure following the general principles thereof and including such departures from the present disclosure as come within known or customary practice in the art.

It will be appreciated that the present disclosure is not limited to the exact construction that has been described above and illustrated in the accompanying drawings, and that various modifications and changes can be made without departing from the scope thereof. It is intended that the scope of the present disclosure only be limited by the appended claims.

## Claims

1. A method for association indication of a phase-tracking reference signal (PTRS), performed by a network device, comprising:
sending indication information to a terminal via a PTRS-demodulation reference signal (DMRS) association indication field in downlink control information (DCI), wherein the indication information indicates an association relationship between a PTRS port and a DMRS port in a case where the terminal sends the PTRS, and the terminal is a terminal supporting eight antenna ports and supporting an uplink transmission with a maximum number of transmission layers being 8.

2. The method of claim 1, wherein different bit values for different bit overheads of the PTRS-DMRS association indication field indicate different association relationships between the PTRS port and the DMRS port.

3. The method of claim 2, wherein an indication mode of the PTRS-DMRS association indication field is determined based on a transmission mode used by the terminal to perform the uplink transmission, and the indication mode of the PTRS-DMRS association indication field comprises a bit overhead of the PTRS-DMRS association indication field and a definition rule of the PTRS-DMRS association indication field.

4. The method of claim 3, wherein the transmission mode comprises a codebook-based fully coherent transmission, a codebook-based partially coherent or non-coherent transmission or a non-codebook-based transmission.

5. The method of claim 4, wherein the transmission mode comprises a codebook-based fully coherent transmission mode, or the transmission mode comprises a non-codebook-based transmission mode and corresponds to one antenna port group; and
the indication mode of the PTRS-DMRS association indication field is determined based on a numeric count of transmission layers of the terminal.

6. The method of claim 5, wherein the PTRS is sent based on a single PTRS port;
in response to a numeric count of actual transmission layers of the terminal being greater than 4, the bit overhead of the PTRS-DMRS association indication field is 3 bits, and the 3 bits indicate one DMRS port in at most eight DMRS ports scheduled that are associated with the PTRS and share the PTRS port; or
in response to a numeric count of actual transmission layers of the terminal being less than or equal to 4, the bit overhead of the PTRS-DMRS association indication field is 2 bits, and the 2 bits indicate one DMRS port in at most four DMRS ports scheduled that are associated with the PTRS and share the PTRS port.

7. The method of claim 5, wherein the PTRS is sent based on a single PTRS port;
in response to the maximum number of transmission layers supported by the terminal being 8, the bit overhead of the PTRS-DMRS association indication field is 3 bits, and the 3 bits indicate one DMRS port in at most eight DMRS ports that are associated with the PTRS and share the PTRS port.

8. The method of claim 4, wherein the transmission mode comprises a codebook-based partially coherent transmission mode, or the transmission mode comprises a codebook-based non-coherent transmission mode, or the transmission mode comprises a non-codebook-based transmission mode and corresponds to a plurality of antenna port groups; and
the indication mode of the PTRS-DMRS association indication field is determined based on at least one of:
the maximum number of transmission layers supported by the terminal or a numeric count of actual transmission layers of the terminal;
a maximum number of PTRS ports configured by a radio resource control (RRC) signaling;
a numeric count of antenna port groups; or
antenna port groups corresponding to an actual transmission layer(s) indicated by a sounding reference signal resource indicator (SRI) and/or a transmitted precoding matrix indicator (TPMI).

9. The method of claim 8, wherein the PTRS is sent based on a single PTRS port in response to the maximum number of PTRS ports configured by the RRC signaling being 1; or
the PTRS is sent based on a single PTRS port in response to the maximum number of PTRS ports configured by the RRC signaling being 2 or 4, and the antenna port groups that correspond to the actual transmission layer(s) indicated by the SRI and/or the TPMI corresponding to the same antenna port group.

10. The method of claim 9, wherein
in response to the numeric count of actual transmission layers of the terminal being greater than 4, the bit overhead of the PTRS-DMRS association indication field is 3 bits, and the 3 bits indicate one DMRS port in at most eight DMRS ports scheduled that are associated with the PTRS and share the PTRS port; or
in response to the numeric count of actual transmission layers of the terminal being less than or equal to 4, the bit overhead of the PTRS-DMRS association indication field is 2 bits, and the 2 bits indicate one DMRS port in at most four DMRS ports scheduled that are associated with the PTRS and share the PTRS port.

11. The method of claim 9, wherein in response to the maximum number of transmission layers supported by the terminal being 8, the bit overhead of the PTRS-DMRS association indication field is 3 bits, and the 3 bits indicate one DMRS port in at most eight DMRS ports that are associated with the PTRS and share the PTRS port.

12. The method of claim 8, wherein in response to the maximum number of PTRS ports configured by the RRC signaling being 2 or 4, the indication mode of the PTRS-DMRS association indication field is determined based on the numeric count of antenna port groups and the antenna port groups corresponding to the actual transmission layer(s) indicated by the SRI and/or the TPMI.

13. The method of claim 12, wherein determining the indication mode of the PTRS-DMRS association indication field based on the numeric count of antenna port groups and the antenna port groups corresponding to the actual transmission layer(s) indicated by the SRI and/or the TPMI comprises:
determining a numeric count of PTRS ports actually used based on the numeric count of antenna port groups and the antenna port groups corresponding to the actual transmission layer(s) indicated by the SRI and/or the TPMI; and
determining the indication mode of the PTRS-DMRS association indication field based on the numeric count of PTRS ports actually used.

14. The method of claim 13, wherein determining the numeric count of PTRS ports actually used based on the numeric count of antenna port groups and the antenna port groups corresponding to the actual transmission layer(s) indicated by the SRI and/or the TPMI comprises:
determining that the numeric count of PTRS ports actually used is 2 in response to the maximum number of PTRS ports configured by the RRC signaling being 2, the numeric count of the antenna port groups being 2, and the antenna port groups corresponding to the actual transmission layer(s) indicated by the SRI and/or the TPMI being different antenna port groups.

15. The method of claim 14, wherein determining the indication mode of the PTRS-DMRS association indication field based on the numeric count of PTRS ports actually used comprises:
the bit overhead of the PTRS-DMRS association indication field being 4 bits in response to the numeric count of PTRS ports actually used being 2, wherein two most significant bits (MSBs) indicate one DMRS port in four DMRS ports that are associated with the PTRS and share a first PTRS port, and two least significant bits (LSBs) indicate one DMRS port in four DMRS ports that are associated with the PTRS and share a second PTRS port; or
the bit overhead of the PTRS-DMRS association indication field being 2 bits in response to the numeric count of PTRS ports actually used being 2, wherein one MSB indicates one DMRS port associated with a first PTRS port, and the one DMRS port associated with the first PTRS port is one DMRS port in first two DMRS antenna ports that are associated with the PTRS and share the first PTRS port; and one LSB indicates one DMRS port associated with a second PTRS port, and the one DMRS port associated with the second PTRS port is one DMRS port in first two DMRS antenna ports that are associated with the PTRS and share the second PTRS port.

16. The method of claim 13, wherein determining the numeric count of PTRS ports actually used based on the numeric count of antenna port groups and the antenna port groups corresponding to the actual transmission layer(s) indicated by the SRI and/or the TPMI comprises:
determining that the numeric count of PTRS ports actually used is 2 in response to the maximum number of PTRS ports configured by the RRC signaling being 2, the numeric count of the antenna port groups is 4, and the antenna port groups corresponding to the actual transmission layer(s) indicated by the SRI and/or the TPMI are different antenna port groups.

17. The method of claim 16, wherein determining the indication mode of the PTRS-DMRS association indication field based on the numeric count of PTRS ports actually used comprises:
determining that the bit overhead of the PTRS-DMRS association indication field is 2 bits in response to the antenna port groups corresponding to the actual transmission layer(s) indicated by the SRI and/or the TPMI being two different antenna port groups, wherein one MSB indicates one DMRS port in two DMRS ports that are associated with the PTRS and share a first PTRS port, and one LSB indicates one DMRS port in two DMRS ports that are associated with the PTRS and share a second PTRS port; or
determining that the bit overhead of the PTRS-DMRS association indication field is 2 bits in response to the antenna port groups corresponding to the actual transmission layer(s) indicated by the SRI and/or the TPMI being more than two different antenna port groups, wherein the 2 bits indicate DMRS ports scheduled that correspond to the antenna port groups corresponding to first two or last two actual transmission layers, and a numeric count of DMRS ports scheduled is less than or equal to 4.

18. The method of claim 13, wherein determining the numeric count of PTRS ports actually used based on the numeric count of antenna port groups and the antenna port groups corresponding to the actual transmission layer(s) indicated by the SRI and/or the TPMI comprises:
determining that the numeric count of PTRS ports actually used is 2 in response to the maximum number of PTRS ports configured by the RRC signaling being 4, the numeric count of the antenna port groups being 2, and the antenna port groups corresponding to the actual transmission layer(s) indicated by the SRI and/or the TPMI being different antenna port groups.

19. The method of claim 18, wherein determining the indication mode of the PTRS-DMRS association indication field based on the numeric count of PTRS ports actually used comprises:
the bit overhead of the PTRS-DMRS association indication field being 4 bits in response to the numeric count of PTRS ports actually used being 2, wherein two MSBs indicate one DMRS port in four DMRS ports that are associated with the PTRS and share a first PTRS port, and two LSBs indicate one DMRS port in four DMRS ports that are associated with the PTRS and share a second PTRS port; or
the bit overhead of the PTRS-DMRS association indication field being 2 bits in response to the numeric count of PTRS ports actually used being 2, wherein one MSB indicates one DMRS port associated with a first PTRS port, and the one DMRS port associated with the first PTRS port is one DMRS port in first two DMRS antenna ports that are associated with the PTRS and share the first PTRS port; one LSB indicates one DMRS port associated with a second PTRS port, and the one DMRS port associated with the second PTRS port is one DMRS port in first two DMRS antenna ports that are associated with the PTRS and share the second PTRS port.

20. The method of claim 13, wherein determining the numeric count of PTRS ports actually used based on the numeric count of antenna port groups and the antenna port groups corresponding to the actual transmission layers indicated by the SRI and the TPMI comprises:
determining that the numeric count of PTRS ports actually used is 1 in response to the maximum number of PTRS ports being 4 and the numeric count of the antenna port groups being 4, and the antenna port groups corresponding to the actual transmission layers indicated by the SRI and the TPMI being one antenna port group;
determining that the numeric count of PTRS ports actually used is 2 in response to the maximum number of PTRS ports being 4 and the numeric count of the antenna port groups being 4, and the antenna port groups corresponding to the actual transmission layers indicated by the SRI and the TPMI being two different antenna port groups;
determining that the numeric count of PTRS ports actually used is 3 in response to the maximum number of PTRS ports being 4 and the numeric count of the antenna port groups being 4, and the antenna port groups corresponding to the actual transmission layers indicated by the SRI and the TPMI being three different antenna port groups;
determining that the numeric count of PTRS ports actually used is 4 in response to the maximum number of PTRS ports being 4 and the numeric count of the antenna port groups being 4, and the antenna port groups corresponding to the actual transmission layers indicated by the SRI and the TPMI being four different antenna port groups.

21. The method of claim 20, wherein determining the bit overhead of the PTRS-DMRS association indication field according to the numeric count of PTRS ports actually used comprises:
determining that the bit overhead of the PTRS-DMRS association indication field is 1 or 2 or 3 bits in response to the numeric count of PTRS ports actually used being 1; or
determining that the bit overhead of the PTRS-DMRS association indication field is 2 bits in response to the numeric count of PTRS ports actually used being 2, wherein one MSB indicates one DMRS port in two DMRS ports that are associated with the PTRS and share a first PTRS port, and one LSB indicates one DMRS port in two DMRS ports that are associated with the PTRS and share a second PTRS port; or
determining that the bit overhead of the PTRS-DMRS association indication field is 3 bits in response to the numeric count of PTRS ports actually used being 3, wherein each bit in the 3 bits indicates a DMRS group sharing the same PTRS port and corresponding to any one antenna port group corresponding to the actual transmission layer(s); or
determining that the bit overhead of the PTRS-DMRS association indication field is 4 bits in response to the numeric count of PTRS ports actually used being 4, wherein each bit in the 4 bits indicates a DMRS group sharing the same PTRS port and corresponding to one antenna port group.

22. The method of claim 21, wherein determining that the bit overhead of the PTRS-DMRS association indication field is 1 or 2 or 3 bits in response to the numeric count of PTRS ports actually used being 1 comprises:
determining that the bit overhead of the PTRS-DMRS association indication field is 1 bit in response to the numeric count of PTRS ports actually used being 1, wherein the 1 bit indicates one DMRS port in at most two DMRS ports that are associated with the PTRS and share the PTRS port; or
determining that the bit overhead of the PTRS-DMRS association indication field is 2 bits in response to the numeric count of PTRS ports actually used being 1 and the maximum number of transmission layers supported by the terminal being less than or equal to 4, wherein the 2 bits indicate one DMRS port in at most two DMRS ports scheduled that are associated with the PTRS and share the PTRS port; or
determining that the bit overhead of the PTRS-DMRS association indication field is 3 bits in response to the numeric count of PTRS ports actually used being 1 and the maximum number of transmission layers supported by the terminal being greater than 4, wherein the 3 bits indicate one DMRS port in at most two DMRS ports scheduled that are associated with the PTRS and share the PTRS port; or
determining that the bit overhead of the PTRS-DMRS association indication field is 3 bits in response to the numeric count of PTRS ports actually used being 1 and the maximum number of transmission layers supported by the terminal being 8, wherein the 3 bits indicate one DMRS port in at most two DMRS ports that are associated with the PTRS and share the PTRS port.

23. The method of claim 4, wherein the transmission mode comprises the non-codebook-based transmission, the indication mode of the PTRS-DMRS association indication field is determined based on a PTRS port index corresponding to an SRS resource set, the SRS resource set comprises at most eight single-port SRS resources, and the PTRS port index indicates an SRS resource sharing the same PTRS port and a DMRS port corresponding to the PTRS port.

24. A method for association indication of a phase-tracking reference signal (PTRS), performed by a terminal, comprising:
receiving indication information sent by a network device via a PTRS -demodulation reference signal (DMRS) association indication field in downlink control information (DCI), wherein the indication information indicates an association relationship between a PTRS port and a DMRS port in a case where the terminal sends the PTRS, and the terminal is a terminal supporting eight antenna ports and supporting an uplink transmission with a maximum number of transmission layers being 8.

25. The method of claim 24, wherein different bit values for different bit overheads of the PTRS-DMRS association indication field indicate different association relationships between the PTRS port and the DMRS port.

26. The method of claim 25, wherein an indication mode of the PTRS-DMRS association indication field is determined based on a transmission mode used by the terminal to perform the uplink transmission, and the indication mode of the PTRS-DMRS association indication field comprises a bit overhead of the PTRS-DMRS association indication field and a definition rule of the PTRS-DMRS association indication field.

27. The method of claim 26, wherein the transmission mode comprises a codebook-based fully coherent transmission, a codebook-based partially coherent or non-coherent transmission or a non-codebook-based transmission.

28. The method of claim 27, wherein the transmission mode comprises a codebook-based fully coherent transmission mode, or the transmission mode comprises a non-codebook-based transmission mode and corresponds to one antenna port group; and
the indication mode of the PTRS-DMRS association indication field is determined based on a numeric count of transmission layers of the terminal.

29. The method of claim 28, wherein the PTRS is sent based on a single PTRS port;
in response to a numeric count of actual transmission layers of the terminal being greater than 4, the bit overhead of the PTRS-DMRS association indication field is 3 bits, and the 3 bits indicate one DMRS port in at most eight DMRS ports scheduled that are associated with the PTRS and share the PTRS port; or
in response to a numeric count of actual transmission layers of the terminal being less than or equal to 4, the bit overhead of the PTRS-DMRS association indication field is 2 bits, and the 2 bits indicate one DMRS port in at most four DMRS ports scheduled that are associated with the PTRS and share the PTRS port.

30. The method of claim 28, wherein the PTRS is sent based on a single PTRS port;
in response to the maximum number of transmission layers supported by the terminal being 8, the bit overhead of the PTRS-DMRS association indication field is 3 bits, and the 3 bits indicate one DMRS port in at most eight DMRS ports that are associated with the PTRS and share the PTRS port.

31. The method of claim 27, wherein the transmission mode comprises a codebook-based partially coherent transmission mode, or the transmission mode comprises a codebook-based non-coherent transmission mode, or the transmission mode comprises a non-codebook-based transmission mode and corresponds to a plurality of antenna port groups; and
the indication mode of the PTRS-DMRS association indication field is determined based on at least one of:
the maximum number of transmission layers supported by the terminal or a numeric count of actual transmission layers of the terminal;
a maximum number of PTRS ports configured by a radio resource control (RRC) signaling;
a numeric count of antenna port groups; or
antenna port groups corresponding to an actual transmission layer(s) indicated by a sounding reference signal resource indicator (SRI) and/or a transmitted precoding matrix indicator (TPMI).

32. The method of claim 31, wherein the PTRS is sent based on a single PTRS port in response to the maximum number of PTRS ports configured by the RRC signaling being 1; or
the PTRS is sent based on a single PTRS port in response to the maximum number of PTRS ports configured by the RRC signaling being 2 or 4, and the antenna port groups that correspond to the actual transmission layer(s) indicated by the SRI and/or the TPMI corresponding to the same antenna port group.

33. The method of claim 32, wherein
in response to the numeric count of actual transmission layers of the terminal being greater than 4, the bit overhead of the PTRS-DMRS association indication field is 3 bits, and the 3 bits indicate one DMRS port in at most eight DMRS ports scheduled that are associated with the PTRS and share the PTRS port; or
in response to the numeric count of actual transmission layers of the terminal being less than or equal to 4, the bit overhead of the PTRS-DMRS association indication field is 2 bits, and the 2 bits indicate one DMRS port in at most four DMRS ports scheduled that are associated with the PTRS and share the PTRS port.

34. The method of claim 32, wherein in response to the maximum number of transmission layers supported by the terminal being 8, the bit overhead of the PTRS-DMRS association indication field is 3 bits, and the 3 bits indicate one DMRS port in at most eight DMRS ports that are associated with the PTRS and share the PTRS port.

35. The method of claim 31, wherein in response to the maximum number of PTRS ports configured by the RRC signaling being 2 or 4, the indication mode of the PTRS-DMRS association indication field is determined based on the numeric count of antenna port groups and the antenna port groups corresponding to the actual transmission layer(s) indicated by the SRI and/or the TPMI.

36. The method of claim 35, wherein determining the indication mode of the PTRS-DMRS association indication field based on the numeric count of antenna port groups and the antenna port groups corresponding to the actual transmission layer(s) indicated by the SRI and/or the TPMI comprises:
determining a numeric count of PTRS ports actually used based on the numeric count of antenna port groups and the antenna port groups corresponding to the actual transmission layer(s) indicated by the SRI and/or the TPMI; and
determining the indication mode of the PTRS-DMRS association indication field based on the numeric count of PTRS ports actually used.

37. The method of claim 36, wherein determining the numeric count of PTRS ports actually used based on the numeric count of antenna port groups and the antenna port groups corresponding to the actual transmission layer(s) indicated by the SRI and/or the TPMI comprises:
determining that the numeric count of PTRS ports actually used is 2 in response to the maximum number of PTRS ports configured by the RRC signaling being 2, the numeric count of the antenna port groups being 2, and the antenna port groups corresponding to the actual transmission layer(s) indicated by the SRI and/or the TPMI being different antenna port groups.

38. The method of claim 37, wherein determining the indication mode of the PTRS-DMRS association indication field based on the numeric count of PTRS ports actually used comprises:
the bit overhead of the PTRS-DMRS association indication field being 4 bits in response to the numeric count of PTRS ports actually used being 2, wherein two most significant bits (MSBs) indicate one DMRS port in four DMRS ports that are associated with the PTRS and share a first PTRS port, and two least significant bits (LSBs) indicate one DMRS port in four DMRS ports that are associated with the PTRS and share a second PTRS port; or
the bit overhead of the PTRS-DMRS association indication field being 2 bits in response to the numeric count of PTRS ports actually used being 2, wherein one MSB indicates one DMRS port associated with a first PTRS port 0, and the one DMRS port associated with the first PTRS port is one DMRS port in first two DMRS antenna ports that are associated with the PTRS and share the first PTRS port; and one LSB indicates one DMRS port associated with a second PTRS port 1, and the one DMRS port associated with the second PTRS port is one DMRS port in first two DMRS antenna ports that are associated with the PTRS and share the second PTRS port 1.

39. The method of claim 36, wherein determining the numeric count of PTRS ports actually used based on the numeric count of antenna port groups and the antenna port groups corresponding to the actual transmission layer(s) indicated by the SRI and/or the TPMI comprises:
determining that the numeric count of PTRS ports actually used is 2 in response to the maximum number of PTRS ports configured by the RRC signaling being 2, the numeric count of the antenna port groups being 4, and the antenna port groups corresponding to the actual transmission layer(s) indicated by the SRI and/or the TPMI being different antenna port groups.

40. The method of claim 38, wherein determining the indication mode of the PTRS-DMRS association indication field based on the numeric count of PTRS ports actually used comprises:
determining that the bit overhead of the PTRS-DMRS association indication field is 2 bits in response to the antenna port groups corresponding to the actual transmission layer(s) indicated by the SRI and/or the TPMI being two different antenna port groups, wherein one MSB indicates one DMRS port in two DMRS ports that are associated with the PTRS and share a first PTRS port, and one LSB indicates one DMRS port in two DMRS ports that are associated with the PTRS and share a second PTRS port; or
determining that the bit overhead of the PTRS-DMRS association indication field is 2 bits in response to the antenna port groups corresponding to the actual transmission layer(s) indicated by the SRI and/or the TPMI being more than two different antenna port groups, wherein the 2 bits indicate DMRS ports scheduled that correspond to the antenna port groups corresponding to first two or last two actual transmission layers, and a numeric count of DMRS ports scheduled is less than or equal to 4.

41. The method of claim 36, wherein determining the numeric count of PTRS ports actually used based on the numeric count of antenna port groups and the antenna port groups corresponding to the actual transmission layer(s) indicated by the SRI and/or the TPMI comprises:
determining that the numeric count of PTRS ports actually used is 2 in response to the maximum number of PTRS ports configured by the RRC signaling being 4, the numeric count of the antenna port groups being 2, and the antenna port groups corresponding to the actual transmission layer(s) indicated by the SRI and/or the TPMI being different antenna port groups.

42. The method of claim 41, wherein determining the indication mode of the PTRS-DMRS association indication field based on the numeric count of PTRS ports actually used comprises:
the bit overhead of the PTRS-DMRS association indication field being 4 bits in response to the numeric count of PTRS ports actually used being 2, wherein two MSBs indicate one DMRS port in four DMRS ports that are associated with the PTRS and share a first PTRS port, and two LSBs indicate one DMRS port in four DMRS ports that are associated with the PTRS and share a second PTRS port; or
the bit overhead of the PTRS-DMRS association indication field being 2 bits in response to the numeric count of PTRS ports actually used being 2, wherein one MSB indicates one DMRS port associated with a first PTRS port 0, and the one DMRS port associated with the first PTRS port 0 is one DMRS port in first two DMRS antenna ports that are associated with the PTRS and share the first PTRS port; one LSB indicates one DMRS port associated with a second PTRS port 1, and the one DMRS port associated with the second PTRS port 1 is one DMRS port in first two DMRS antenna ports that are associated with the PTRS and share the second PTRS port 1.

43. The method of claim 36, wherein determining the numeric count of PTRS ports actually used based on the numeric count of antenna port groups and the antenna port groups corresponding to the actual transmission layers indicated by the SRI and the TPMI comprises:
determining that the numeric count of PTRS ports actually used is 1 in response to the maximum number of PTRS ports being 4 and the numeric count of the antenna port groups being 4, and the antenna port groups corresponding to the actual transmission layers indicated by the SRI and the TPMI being one antenna port group;
determining that the numeric count of PTRS ports actually used is 2 in response to the maximum number of PTRS ports being 4 and the numeric count of the antenna port groups being 4, and the antenna port groups corresponding to the actual transmission layers indicated by the SRI and the TPMI being two different antenna port groups;
determining that the numeric count of PTRS ports actually used is 3 in response to the maximum number of PTRS ports being 4 and the numeric count of the antenna port groups being 4, and the antenna port groups corresponding to the actual transmission layers indicated by the SRI and the TPMI being three different antenna port groups;
determining that the numeric count of PTRS ports actually used is 4 in response to the maximum number of PTRS ports being 4 and the numeric count of the antenna port groups being 4, and the antenna port groups corresponding to the actual transmission layers indicated by the SRI and the TPMI being four different antenna port groups.

44. The method of claim 43, wherein determining the bit overhead of the PTRS-DMRS association indication field according to the numeric count of PTRS ports actually used comprises:
determining that the bit overhead of the PTRS-DMRS association indication field is 1 or 2 or 3 bits in response to the numeric count of PTRS ports actually used being 1; or
determining that the bit overhead of the PTRS-DMRS association indication field is 2 bits in response to the numeric count of PTRS ports actually used being 2, wherein one MSB indicates one DMRS port in two DMRS ports that are associated with the PTRS and share a first PTRS port, and one LSB indicates one DMRS port in two DMRS ports that are associated with the PTRS and share a second PTRS port; or
determining that the bit overhead of the PTRS-DMRS association indication field is 3 bits in response to the numeric count of PTRS ports actually used being 3, wherein each bit in the 3 bits indicates a DMRS group sharing the same PTRS port and corresponding to any one antenna port group corresponding to the actual transmission layer(s); or
determining that the bit overhead of the PTRS-DMRS association indication field is 4 bits in response to the numeric count of PTRS ports actually used being 4, wherein each bit in the 4 bits indicates a DMRS group sharing the same PTRS port and corresponding to one antenna port group.

45. The method of claim 44, wherein determining that the bit overhead of the PTRS-DMRS association indication field is 1 or 2 or 3 bits in response to the numeric count of PTRS ports actually used being 1 comprises:
determining that the bit overhead of the PTRS-DMRS association indication field is 1 bit in response to the numeric count of PTRS ports actually used being 1, wherein the 1 bit indicates one DMRS port in at most two DMRS ports that are associated with the PTRS and share the PTRS port; or
determining that the bit overhead of the PTRS-DMRS association indication field is 2 bits in response to the numeric count of PTRS ports actually used being 1 and the maximum number of transmission layers supported by the terminal being less than or equal to 4, wherein the 2 bits indicate one DMRS port in at most two DMRS ports scheduled that are associated with the PTRS and share the PTRS port; or
determining that the bit overhead of the PTRS-DMRS association indication field is 3 bits in response to the numeric count of PTRS ports actually used being 1 and the maximum number of transmission layers supported by the terminal being greater than 4, wherein the 3 bits indicate one DMRS port in at most two DMRS ports scheduled that are associated with the PTRS and share the PTRS port; or
determining that the bit overhead of the PTRS-DMRS association indication field is 3 bits in response to the numeric count of PTRS ports actually used being 1 and the maximum number of transmission layers supported by the terminal being 8, wherein the 3 bits indicate one DMRS port in at most two DMRS ports that are associated with the PTRS and share the PTRS port.

46. The method of claim 27, wherein the transmission mode comprises the non-codebook-based transmission, the indication mode of the PTRS-DMRS association indication field is determined based on a PTRS port index corresponding to an SRS resource set, the SRS resource set comprises at most eight single-port SRS resources, and the PTRS port index indicates an SRS resource sharing the same PTRS port and a DMRS port corresponding to the PTRS port.

47. An apparatus for association indication of a phase-tracking reference signal (PTRS), applied to a network device, comprising:
a sending module configured to send indication information to a terminal via a PTRS-demodulation reference signal (DMRS) association indication field in downlink control information (DCI), wherein the indication information indicates an association relationship between a PTRS port and a DMRS port in a case where the terminal sends the PTRS, and the terminal is a terminal supporting eight antenna ports and supporting an uplink transmission with a maximum number of transmission layers being 8.

48. An apparatus for association indication of a phase-tracking reference signal (PTRS), applied to a terminal, comprising:
a receiving module configured to receive indication information sent by a network device via a PTRS-demodulation reference signal (DMRS) association indication field in downlink control information (DCI), wherein the indication information indicates an association relationship between a PTRS port and a DMRS port in a case where the terminal sends the PTRS, and the terminal is a terminal supporting eight antenna ports and supporting an uplink transmission with a maximum number of transmission layers being 8.

49. A device for association indication of a phase-tracking reference signal (PTRS), comprising:
a processor; and
a memory for storing processor-executable instructions;
wherein the processor is configured to perform the method for association indication of the PTRS of any one of claims 1 to 23.

50. A device for association indication of a phase-tracking reference signal (PTRS), comprising:
a processor; and
a memory for storing processor-executable instructions;
wherein the processor is configured to perform the method for association indication of the PTRS of any one of claims 24 to 46.

51. A storage medium having stored therein instructions that, when executed by a processor of a network device, cause the network device to perform the method for association indication of the PTRS of any one of claims 1 to 23.

52. A storage medium having stored therein instructions that, when executed by a processor of a network device, cause the network device to perform the method for association indication of the PTRS of any one of claims 24 to 46.
